# EUROPEAN PATENT SPECIFICATION

(11) **EP 1 677 189 B1**
(45) Date of publication and mention of the grant of the patent: **28.05.2008**
(21) Application number: 05112925.2
(22) Date of filing: 23.12.2005
(51) Int. Cl.: G06F 9/445, H04L 29/06, H04L 12/56, H04L 12/28

(54) **Extensible architecture for device configuration via trusted medium**
Erweiterbare Architektur zur Konfiguration eines Gerätes über ein verlässliches Medium
Architecture extensible pour la configuration d'un dispositif par un médium de confiance

(30) Priority: 30.12.2004 US 26193
(43) Date of publication of application: 05.07.2006
(73) Proprietor: MICROSOFT CORPORATION, Redmond, Washington 98052 (US)
(72) Inventor: Nick, Benjamin E. c/o Microsoft Corporation, WA 98052 (US); Bhesania, Firdosh K., Redmond, WA 98052 (US); Aull, Randall E., Redmond, WA 98052 (US); Manchester, Scott A., Redmond, WA 98052 (US)
(74) Representative: Grünecker, Kinkeldey, Stockmair & Schwanhäusser Anwaltssozietät

(56) References cited:
- EP-A- 0 869 651
- EP-A- 1 233 337
- US-A- 5 339 432
- US-A- 5 613 123
- "IEEE standard for information technology - telecommunications and information exchange between systems - local and metropolitan area networks - specific requirement. Part 11: wireless LAN medium access control (MAC) and physical layer (PHY) specification. (ISO/IEC 8802-11, ANSI/IEEE Std 802.11-1999)" ISO/IEC 8802-11 ANSI/IEEE STD 802.11, 20 August 1999 (1999-08-20), pages 1,34-58, XP002206839

## Description

### TECHNICAL FIELD

The subject invention relates generally to computer system(s) and, more particularly, to an extensible architecture for untrusted medium (e.g., wireless) device configuration *via* trusted medium.

### BACKGROUND OF THE INVENTION

The popularity of employing wireless device(s) with computer system(s) has increased in recent years. For example, many devices communicate *via* wireless busses such as WiFi (IEEE 802.11) and/or Bluetooth.

"Bluetooth" refers to a protocol of a short-range (e.g., about 10 meters) frequency-hopping radio link between devices to allow wireless connections between the devices. Bluetooth employs Gaussian frequency shift keying to modulate the data to frequencies around 2.4 GHz and is capable of point-to-point or point-to-multipoint communication. This flexibility allows the wireless technology of Bluetooth to penetrate the market in a variety of applications such as heart rate monitors, PDAs (personal digital assistants), and human interface devices (HIDs), for example, keyboards.

With respect to WiFi, generally, when a user comes within range of a wireless network, the client device is able to discern two pieces of information about that network, without connecting to it (e.g., from the wireless network beacon): (1) the service set identifier (SSID) of the network (e.g., essentially its name); and, (2) whether or not the network encrypts data. If the network employs encryption, an encryption key is required. The encryption key can be manually entered by the user and/or sent in accordance with the 802.1 x protocol.

With the information that the client device can retrieve from the wireless network beacon, the client device can generally determine whether the network is of type unencrypted, encrypted or, with the addition of a Wi-Fi Protected Access (WPA) information element, encrypted using WPA-pre-shared key or encrypted using WPA. If it is unencrypted, then a user needs only to acknowledge that the network is insecure, and that they wish to use it in spite of that information. However, if it is encrypted and does not use WPA, then it either requires the user to enter a Wired Equivalent Privacy (WEP) key or it is an 802.1x-enabled network which distributes the WEP key automatically (requiring the client computer to enable 802.1x authentication to complete the connection).

Employment of a wireless device with a computer system can differ markedly from the use of a wired device. For example, a user of a wireless device can be required to indicate with which computer system and/or network the user desires the wireless device to communicate. Additionally, a user and/or wireless device can provide a secret key to facilitate encrypted communication. Further, the computer system and/or wireless device can engage in mutual authentication and/or deal with device(s) going out of range and reappearing.

There are many security issues related to the use of wireless device(s). For example, a rogue computer system and/or network can attach to a wireless device before a user of the wireless device can associate the wireless device with the computer system and/or network of the user's choice. Additionally, with conventional systems, association of a wireless device with a specific computer system and/or network can take an excessive amount of time (*e.g*., five minutes).

US 5 613 123 A relates to a method and system for configuring and executing device drivers in a computer system, based on configuration requirements. It is further stated that an application program formulates input/output requests and passes the requests to the operating system through an application program interface. When the application program interface receives an input/output request, it invokes the input-output system, passing it the request. The input-output system determines which device driver can service the request depending on which device is identified in the request.

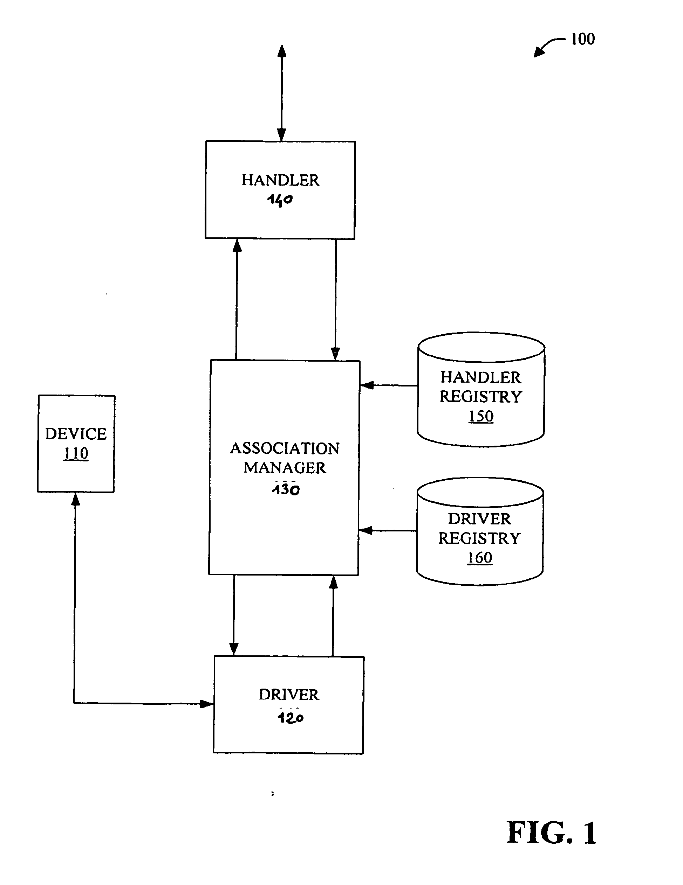

EP 0 869 651 A relates to a method and apparatus for secure data communication. This goal is reached via the exchanged framework shown on Figure 1, where a user system transmits the secure data from an ISDN circuit on the D-channel, and the general data on the B-channel. The digital exchange routes the general data via the Internet to a service provider, and a frame handler in the digital exchange recognizes the secure data in the D-channel and routes it via physically separate telecommunication link to the service provider. Further, the service provider merges the secure and general data and performs the usual transaction processing operations.

### SUMMARY OF THE INVENTION

The following presents a simplified summary of the subject invention in order to provide a basic understanding of some aspects of the subject invention. This summary is not an extensive overview of the subject invention. It is not intended to identify key/critical elements of the subject invention or to delineate the scope of the subject invention. Its sole purpose is to present some concepts of the subject invention in a simplified form as a prelude to the more detailed description that is presented later.

It is the object of the present invention to provide an extensible architecture for an untrusted medium (e.g., wireless) device configuration via a trusted medium. The architecture can be employed to associate a device that utilizes an untrusted medium (e.g., wireless connection). Association is effected using a trusted medium, for example, a wired connection.

This object is solved by the subject matter of the independent claims.

Embodiments are given in the dependent claims.

The architecture can facilitate configuration of the device to communicate (*e.g*., securely) *via* an untrusted medium (e.g., wireless connection). Configuration of the device can be based, at least in part, upon information exchanged *via* a trusted medium (*e.g*., wired connection). For example, the device can send an association request to a driver and receives an association response from the driver. An "association request" refers to a block of data sent from the device to a driver in order to initiate association. An "association response" refers to a block of data sent from the driver to the device in order to complete association (*e.g*., successful and/or unsuccessful).

If the association is successful, the association response can include, for example, configuration information (*e.g.*, encryption key) to enable the device to communicate (*e.g*., securely) *via* the untrusted medium. If the association is unsuccessful, the association response can include, for example, error information.

In accordance with an aspect of the subject invention, a driver channels an association request received *via* a trusted medium from a device to an association manager. The driver further can provide an association response received from the association manager to the device *via* the trusted medium. Alternatively, the driver can generate and provide an association request to the association manager. Optionally, the driver can further determine an appropriate time for issuance of an association request.

Another aspect of the subject invention provides for the association manager to direct association data to the appropriate components. The association manager can receive an association request from a driver. Based, at least in part, upon routing information in the association request, the association manager can provide information associated with the association request to a particular handler for processing. Once the particular handler has completed processing of the association request, the handler can provide an association response to the association manager. The association manager can provide the association response to the requesting driver.

Yet another aspect of the subject invention provides for the handler to (along with possibly other component(s) (not shown)) consume the association request and generates information associated with an association response. The handler takes action based, at least in part, upon contents of the association request, as described in greater detail below. For example, the action(s) can be dependent upon the connection type sought to be established by the association request. Once the particular handler has completed processing of the association request, the handler can provide an association response to the association manager.

The architecture can include a handler registry which stores identification information associated with one or more handlers. The association manager can employ the identification information stored in the handler registry to determine to which of a plurality of handlers to provide a particular association request.

Further, the architecture can, optionally, include a driver registry that stores identification information associated with one or more drivers. The association manager can employ the identification information stored in the driver registry to determine which of one or more drivers to instantiate, for example, during initialization.

To the accomplishment of the foregoing and related ends, certain illustrative aspects of the subject invention are described herein in connection with the following description and the annexed drawings. These aspects are indicative, however, of but a few of the various ways in which the principles of the subject invention may be employed and the subject invention is intended to include all such aspects and their equivalents. Other advantages and novel features of the subject invention may become apparent from the following detailed description of the subject invention when considered in conjunction with the drawings.

### BRIEF DESCRIPTION OF THE DRAWINGS

Fig. 1 is a block diagram of an association architecture in accordance with an aspect of the subject invention.

Fig. 2 is a diagram of an association request in accordance with an aspect of the subject invention.

Fig. 3 is a diagram of an associate response in accordance with an aspect of the subject invention.

Fig. 4 is a block diagram of an association management system in accordance with an aspect of the subject invention.

Fig. 5 is a block diagram of an association management system in accordance with an aspect of the subject invention.

Fig. 6 is a block diagram of an association handler system in accordance with an aspect of the subject invention.

Fig. 7 is a block diagram of an association driver system in accordance with an aspect of the subject invention.

Fig. 8 is a flow chart of a method of associating a device in accordance with an aspect of the subject invention.

Fig. 9 is a flow chart of a method facilitating association of a device in accordance with an aspect of the subject invention.

Fig. 10 is a flow chart of a method of associating a device *via* a USB connection in accordance with an aspect of the subject invention.

Fig. 11 is a flow chart further illustrating the method of Fig. 10.

Fig. 12 is a flow chart further illustrating the method of Figs. 10 and 11.

Fig. 13 is a flow chart of an association management method in accordance with an aspect of the subject invention.

Fig. 14 is a flow chart of an association management method in accordance with an aspect of the subject invention.

Fig. 15 is a flow chart further illustrating the method of Fig. 14.

Fig. 16 is a flow chart further illustrating the method of Figs. 14 and 15.

Fig. 17 is a flow chart of an association handler method in accordance with an aspect of the subject invention.

Fig. 18 illustrates an example operating environment in which the invention may function.

### DETAILED DESCRIPTION OF THE INVENTION

The subject invention is now described with reference to the drawings, wherein like reference numerals are used to refer to like elements throughout. In the following description, for purposes of explanation, numerous specific details are set forth in order to provide a thorough understanding of the subject invention. It may be evident, however, that the subject invention may be practiced without these specific details. In other instances, well-known structures and devices are shown in block diagram form in order to facilitate describing the subject invention.

As used in this application, the terms "component," "handler," "model," "system," and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers. Also, these components can execute from various computer readable media having various data structures stored thereon. The components may communicate *via* local and/or remote processes such as in accordance with a signal having one or more data packets (*e.g*., data from one component interacting with another component in a local system, distributed system, and/or across a network such as the Internet with other systems *via* the signal). Computer components can be stored, for example, on computer readable media including, but not limited to, an ASIC (application specific integrated circuit), CD (compact disc), DVD (digital video disk), ROM (read only memory), floppy disk, hard disk, EEPROM (electrically erasable programmable read only memory) and memory stick in accordance with the subject invention.

Further, "trusted medium" refers to a trusted connection over which association information can be transferred in order to associate an untrusted medium. Examples of trusted media include, but are not limited to, a serial connection, a parallel connection and/or a universal serial bus (USB) connection "Untrusted medium" refers to a medium which is being associated in order to establish trust. Wireless connection(s) such as Bluetooth and/or IEEE 802.11 are examples of untrusted media.

Referring to Fig. 1, an association architecture 100 in accordance with an aspect of the subject invention is illustrated. The architecture 100 can be employed to associate a device 110 that utilizes an untrusted medium (*e.g*., wireless connection). Association is effected using a trusted medium, for example, a wired connection.

An "association request" refers to a block of data sent from the device 110 to a driver 120 in order to initiate association. The association request can then be forwarded to an association manager 130 which forward to the association request to an appropriate handler 140. An "association response" refers to a block of data sent from the driver 120 to the device 110 in order to complete association (*e.g*., successful and/or unsuccessful).

The architecture 100 can facilitate configuration of the device 110 to communicate (*e.g*., securely) *via* an untrusted medium (*e.g*., wireless connection). Configuration of the device 110 can be based, at least in part, upon information exchanged *via* a trusted medium (*e.g*., wired connection). In one example, the device 110 sends an association request to the driver 120 and receives an association response from the driver 120. If the association is successful, the association response can include, for example, configuration information (*e.g*., encryption key) to enable the device 110 to communicate (*e.g*., securely) *via* the untrusted medium. If the association is unsuccessful, the association response can include, for example, error information.

In one example, the device 110 is a wireless-enabled digital camera that also includes a USB connection. The USB connection (trusted medium) can be employed to configure the wireless connection (untrusted medium) of the digital camera. For example, a "found new hardware" wizard can be employed to choose and/create a wireless profile to transfer to the digital camera *via* the architecture 100. Once the profile information has been transferred to the digital camera *via* the USB connection, the USB connection can be disconnected and the digital camera can communicate *via* the wireless connection.

For example, the driver 120 can channel an association request received *via* a trusted medium from a device 110 to the association manager 130. The driver 120 further can provide an association response received from the association manager 130 to the device 110 *via* the trusted medium. In another example, the driver 120 generates and provides an association request to the association manager 130. Optionally, the driver 120 can further determine an appropriate time for issuance of an association request.

In yet another example, a particular driver 120 can be employed to configure a plurality of untrusted media. For example, a driver 120 can be employed to communicate *via* a USB connection to a plurality of devices 110 that communicate *via* a plurality of untrusted media.

The association manager 130 provides association data to the appropriate components. The association manager 130 can receive an association request from a driver 120. Based, at least in part, upon routing information in the association request, the association manager 130 can provide information associated with the association request to a particular handler 140 for processing. Once the particular handler 140 has completed processing of the association request, the handler 140 can provide an association response to the association manager 130. Based, at least in part, upon routing information in the association response, the association manager 130 can provide the association response to the requesting driver 120.

The handler 140 interfaces with a service (not shown) that implements device installation. In one example, the handler 140 is the only component of the architecture 100 that has explicit knowledge of the association request. The handler 140 take action based, at least in part, upon contents of the association request, as described in greater detail below. For example, the action(s) can be dependent upon the connection type sought to be established by the association request. Once the particular handler 140 has completed processing of the association request, the handler 140 can provide an association response to the association manager 130.

The architecture 100 can include a handler registry 150 which stores identification information associated with one or more handlers 140. The association manager 130 can employ the identification information stored in the handler registry 150 to determine to which of a plurality of handlers 140 to provide a particular association request.

Further, the architecture 100 can, optionally, include a driver registry 160 that stores identification information associated with one or more drivers 120. The association manager 130 can employ the identification information stored in the driver registry 160 to determine which of one or more drivers 120 to instantiate, for example, during initialization (as discussed below).

While depicted as a single entity, those skilled in the art will recognize that the device 110 can include an object that sends and/or receives association requests and an object (*e.g*., target device) that ultimately is associated with a host.

In one example, the architecture 100 supports only one association request and associated association response. In this example, the information needed from the device 110 to facilitate association is embedded in the association request. Similarly, the information needed for the device 110 to facilitate association is embedded in the association response.

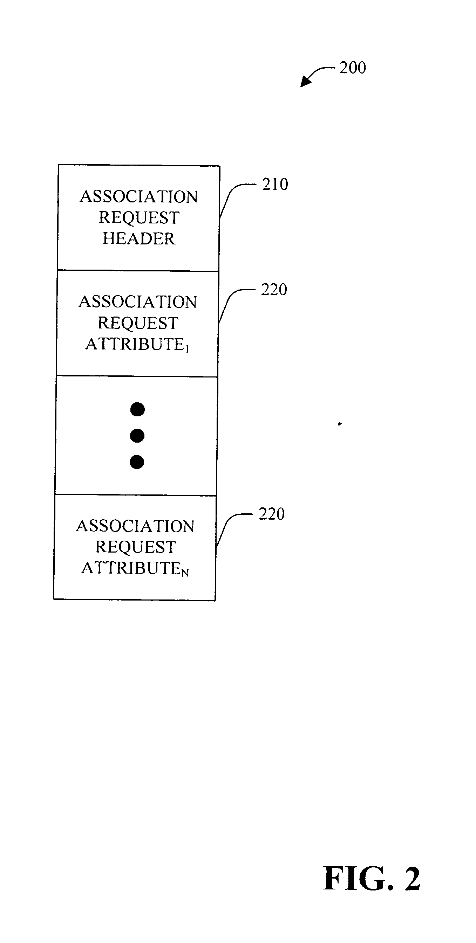

Referring to Fig. 2, an association request 200 in accordance with an aspect of the subject invention is illustrated. The association request 200 includes an association request header 210 and one or more association request attribute(s) 220 (e.g., attribute type, length and data). An attribute is a single item within an association request and/or response. For example, the association request header 210 can include a set of globally defined request attribute(s) similar in format to those described below with respect to association request attribute(s) 220.

In one example, association request(s) and/or association response(s) are organized in a parse-able stream. The stream comprises a series of attribute(s) with each attribute having a defined type and associated data. This facilitates flexibility and extensibility of the architecture. An exemplary attribute structure is set forth in Table 1:

**TABLE 1**

| Byte Offset | Field Length | Field Name | Description |
|---|---|---|---|
| 0 | 2 | AttributeType | Identifier that describes the particular attribute. |
| 2 | 2 | AttributeDataLength | The length in bytes of the data field of this attribute |
| 4 | 0-0xFFFF | Data | Data for this particular attribute |

This exemplary attribute structure can be defined, for example, as:

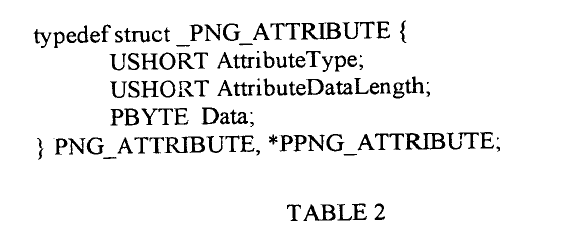

In one example, there are several pre-defined attribute types that are intended to be used by the system itself (*e.g*., common to many association types), and are not specific to any particular association type.

**TABLE 3**

| AttributeType Value | Attribute Name | AttributeDataLength | Description |
|---|---|---|---|
| 0x0000 | AssociationType | Sizeof(GUID) | This is the identifier of the type of association data is to follow. It is a unique GUID that is defined when the handler is defined. This value can be used for two purposes. First it defines what software component should handle the association request (*e*.*g*., a Bluetooth Handler). Second, it defines the scope for the attributes to follow, since most attribute types only have to be unique with respect to their AssociationType. |
| 0x0001 | Length | 4 | This is the total length of the Request or Response, including the AssociationType and Length attributes. |
| 0x002 | MaximumResponseLength | 4 | This is the maximum supported length in bytes of Association Response. This can be determined, for example, by the device's resource constraints. |
| 0x0003 | Association Status | 4 | This is the status for the association and is included in the Response. |
| 0x0004 - 0x1000 | RESERVED | 0-0xFFFF | In this example, these AttributeType values are reserved for future use and are not be used for any AssociationType specific attributes. |

Exemplary association status values are:

**TABLE 4**

| Value | Name | Description |
|---|---|---|
| 0x0000 | ASSOCIATION_SUCCESS | Association was completed successfully, and the response is valid. |
| 0xC001 | ERROR_MALFORMED_ASSOCIATION_REQUEST | The association request was not formed correctly. |
| 0xC002 | ERROR_ASSOCIATION_TYPE_NOT_SUPPORTED | The association type specified in the Association Request does not have a registered handler. |

### Association Request

In this example, an association request is a series of attributes. The first attribute is the AssociationType. This is used to identify which handler to which the request should be directed. In this example, this value is a GUID that is defined by the handler (or some specification associated with the handler). For example, in order to associate a Bluetooth device, there can be a Bluetooth specific GUID, and a handler that has specified that it handles that particular GUID.

The second attribute in the association request is the length. This is the total length of all of the attributes in this request including the AssociationType and Length field itself This is used to aide in parsing, so that if a component is not interested in a specific AssociationType, it can skip over the whole request as opposed to having to parse each attribute within it.

In this example, the attribute(s) that immediately follow the length are defined carefully in order to facilitate simple devices to be able to implement basic association with minimal processing (e.g., device(s) having silicon-only solutions with no firmware). In order to achieve this, being able to simply jump to a pre-defined offset in a structure in order to extract desired data can be helpful. Thus, in this example, the attributes immediately following the length contain the minimal amount of data needed to carry out basic association. Further, the attributes can be laid out in a pre-defined order and always be present. In one example, substantially all of this required data is contained within a single attribute. In this example, any variable length fields are located at the end of these basic attributes so as to not affect the offset in the association request.

In another example, several attributes are employed, each containing a small amount of data. Thus, it is to be appreciated that any number of attribute(s), if any, can follow, for example, in order to provide extended functionality.

### Association response

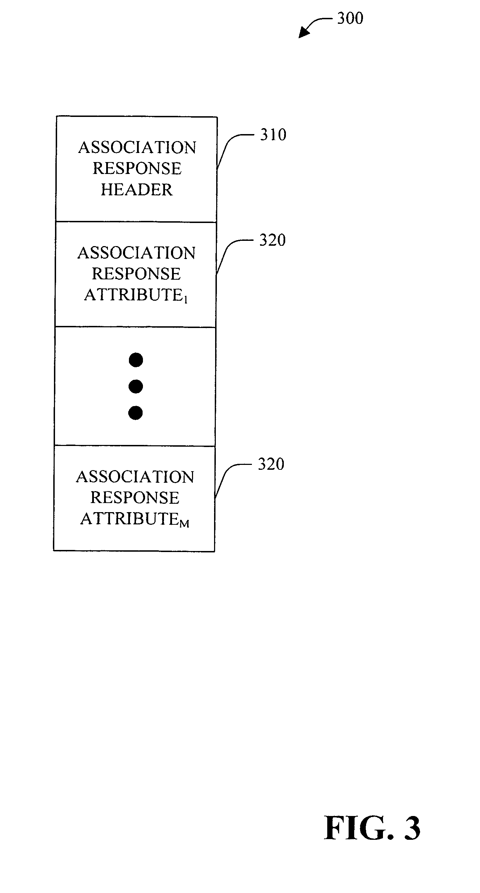

Turning to Fig. 3, an associate response 300 in accordance with an aspect of the subject invention is illustrated. The association response 300 includes an association response header 310 and zero, one or more association response attribute(s) 320. For example, the association response header 310 can include a set of globally defined request attribute(s) similar in format to those described below with respect to association response attribute(s) 320.

An association response attribute 320 is a piece of data comprising an attribute type, length, and data. Similar to the association request discussed above, in one example, the association response is a series of attributes. In this example, the first attribute is the AssociationType. This is used to echo the AssociationType of the association request that resulted in this response.

The second attribute in the association response is the length. This is the total length of all of the attributes in this request including the AssociationType and length field itself This is used to aide in parsing, so that if a component is not interested in a specific AssociationType, it can skip over the response as opposed to having to parse each attribute within it.

The third attribute of the association response is the AssociationStatus. This is to notify the device as to the result of the association request. In this example, if the association process was successful, then this value will be 0x0000, meaning that the device can continue to read the attributes in the association response. If the value is Oxc0001, then the host could not find a handler that can handle the specified AssociationType. In this case, the device should not make any assumptions about further attributes in the association response.

The attribute(s) immediately following the AssociationStatus can be defined carefully as discussed above to allow simple devices to be able to implement basic association with minimal processing. In this example, in order to achieve this, being able to simply jump to a pre-defined offset in a structure in order to extract desired data is necessary. So these attributes contain the minimal amount of data needed to carry out basic association. They are also laid out in a pre-defined order and always be present in this example. Any variable length fields are located at the end of these basic attributes so as to not affect the offset in the association request. Any number of attributes, if any, can follow in order to provide extended functionality.

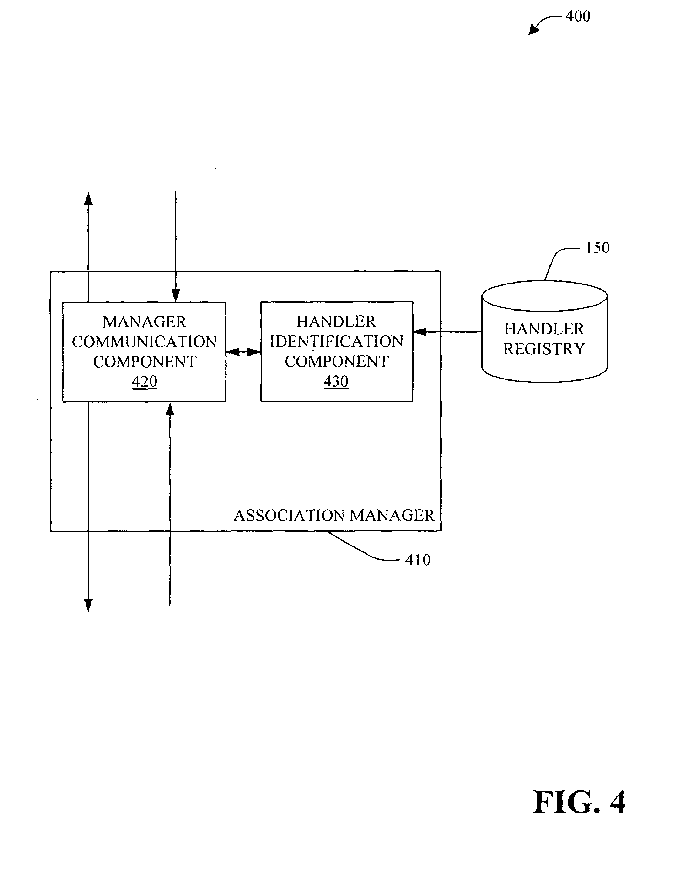

Referring to Fig. 4, an association management system 400 in accordance with an aspect of the subject invention is illustrated. The association management system 400 includes an association manager 410 having a manager communication component 420 and a handler identification component 430. The system 400 further includes a handler registry 150, and, optionally, a driver registry 160.

The association manager 410 is responsible for providing association data (e.g., association request(s) and/or association response(s)) to the appropriate components (e.g., handler and/or driver). The manager communication component 420 can receive association request(s) from driver(s) (not shown). The manager communication component 420 can provide at least part of the association request (*e.g*., association request header) to the handler identification component 430.

Based on the information provided by the manager communication component 420 and identification information stored in the handler registry 150, the handler identification component 430 identifies the particular handler (not shown) to which the association request is to be provided. In one example, the association manager 410 loads the handler identified by the handler identification component 430. In another example, handler(s) are loaded at initialization (as discussed in greater detail below). Thereafter, the manager communication component 420 provides information associated with the association request to the handler identified by the handler identification component 430.

Once the handler has processed the association request, the handler provides an association response to the manager communication component 420. The manager communication component 420 then provides the association response to the requesting driver.

In one example, the association manager 410 validates the association request. For example, the association manager 410 can determine whether the association request is well-formed. If the request is not well-formed, then the association manager 410 can generate an association response indicating the association request was malformed (e.g., status attribute set to ERROR_MALFORMED_ASSOCIATION_REQUEST) and provide the association response to the requesting driver. In this example, the association manager 410 utilizes the following criteria to determine whether an association request is well-formed:
a. The request length is at least large enough to hold the Association Type and Length attributes (*e.g.*, 36 bytes);
b. The first attribute is the Association Type and its length is of the appropriate size (*e.g*., based on a globally unique identifier (GUID) associated with the particular handler);
c. The second attribute is the Length and is of the appropriate size (e.g., ULONG);
d. The value of the Length attribute is greater than the Association Type and Length attributes (*e.g*., 36 bytes), and is less than or equal to the length of the request;
e. Each following attribute has a length that when added to its current position in the request does not result in a value greater than the value in the Length attribute;
f. Exactly one association type attribute and exactly one Length attribute is present in the request.

Next, the association manager 410 determines if there is a handler that has registered for the specified association type included in the association request (*e.g*., GUID stored in the handler registry 150). If a handler is not found, then the association manager 410 can generate an association response indicating that the association type requested is not supported and provide the association response to the requesting driver.

If a handler is found, in this example, the association manager 410 can parse the association request and extract a list of attribute(s). The association manager 410 can then provide the list of extracted attribute(s) to the particular handler.

If the association manager 410 is unsuccessful in providing the list of extracted attribute(s) to the particular handler, the association manager 410 can generate an association response indicating that the particular handler was not responsive and provide the association response to the requesting driver.

If the association manager 410 is successful in providing the list of extracted attribute(s) the particular handler, upon completion of processing by the handler, in this example, the association manager 410 receives an association response attribute list from the handler. The association manager 410 can determine whether the association response attribute list is well-formed. For example:
a. There is exactly one status attribute;
b. A Length attribute and an association type attribute are not present (e.g., to be added by the association manager 410);
c. If the association request included a maximum response length attribute, then the total size of the attributes must be less than that value.

If the response is well-formed, then the association manager 410 generates an association response (*e.g*., byte array) based, at least in part, upon the association response attribute list. For example, the association manager 410 can:
a. Add up the total size of all attributes in the response attribute list;
b. Add the size required for the association type and length attributes;
c. Allocate a buffer large enough to hold the response;
d. Set the first attribute in the buffer to the association type from the association request;
e. Add the length attribute to the buffer using the calculated response length.
f. Add an association status attribute;
g. Add each additional attribute in the order that they were in the list.

The association manager 410 can then provide the association response to the requesting driver.

In one example, the association manager implements the following interface:

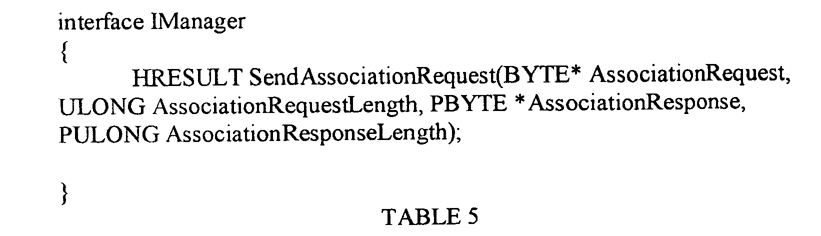

SendAssociationRequest() is called by driver(s) in order to begin the association process. The association response is returned as a byte array which can easily be sent back to the device. In one example, it is the responsibility of the driver to free the AssociationResponse.

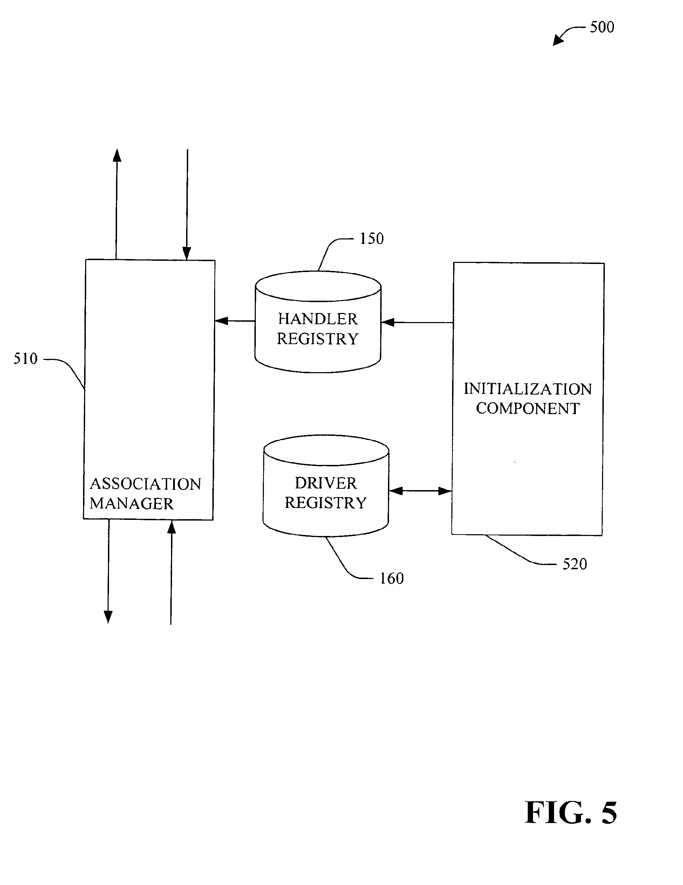

Turning to Fig. 5, an association management system 500 in accordance with an aspect of the subject invention is illustrated. The system 500 includes an association manager 510, a handler registry 150, a driver registry 160 and an initialization component 520.

The association manager 510 is responsible for providing association data (*e.g.*, association request(s) and/or association response(s)) to the appropriate components (*e.g*., handler and/or driver), as discussed previously. However, in this example, the initialization component 520 employs information stored in the driver registry 160 to determine which of one or more drivers (not shown) to instantiate, for example, during initialization of the system 500. For example, driver(s) can be registered during configuration of a computer system (not shown) (*e.g*., manually and/or automatically).

In one example, upon system initialization, the initialization component 520 identifies driver(s) and handler(s) based, at least in part, upon information stored in the driver registry 160 and handler registry 150, respectively. Thereafter, the initialization component 520 creates instances of the identified handler(s) and the identified driver(s).

In this example, for each of the handlers, the association manager 510 can retrieve an association type count and allocate an associated storage buffer (*e.g*., association type count * sizeof (GUID)). This buffer can be used to retrieve the association types from the handler. In another example, the handler allocates the storage space and provides it to the association manager.

The association types can be an array of GUIDs that represent the specific association types that the handler supports. For each of the GUIDs retrieved, an entry can be added to a list of GUID to Handler mappings stored in the handler registry. For example:

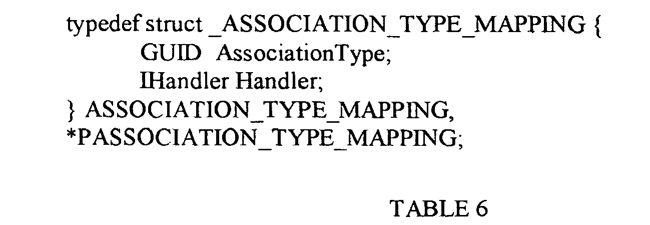

This list of mappings can then be employed by the association manager 510 to determine routing of association requests to the appropriate handler.

In this example, once the handlers have been created and their association types discovered, the initialization component 520 activates the drivers. Activation occurs after the handlers have been loaded and initialized to ensure that association request(s) are not received until the handlers have been discovered and loaded. For example, to activate a driver, a "Start()" method can be invoked.

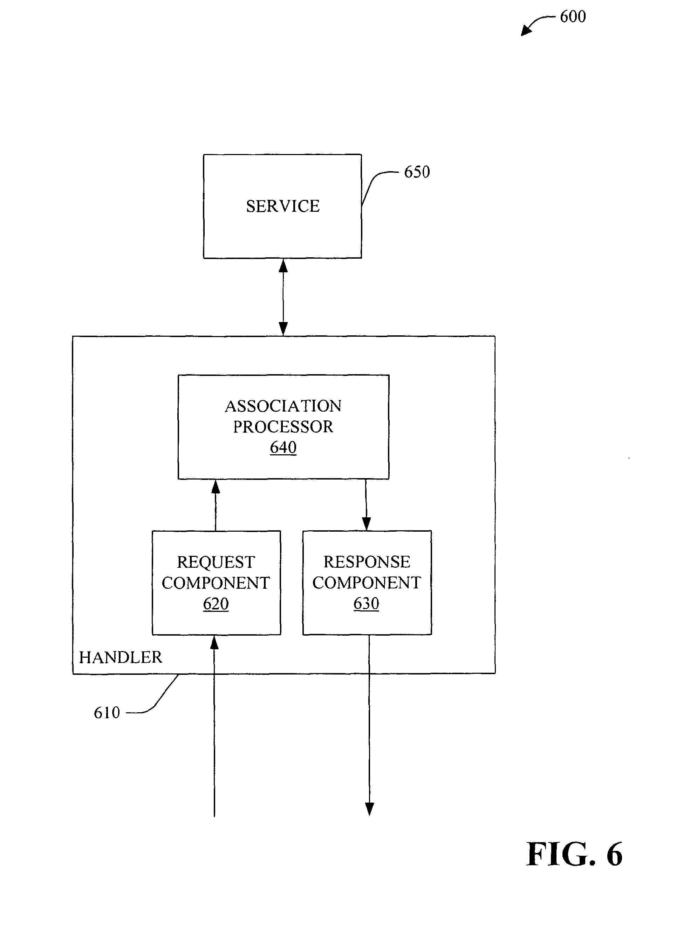

Next, referring to Fig. 6, an association handler system 600 in accordance with an aspect of the subject invention is illustrated. The system 600 includes a handler 610 comprising a request component 620, a response component 630 and an association processor.

The handler 610 (along with possibly other component(s) (not shown)) consumes the association request and generates information associated with an association response.

For example, the request component 620 can receive information associated with an association request (*e.g*., the association request and/or a parsed list of attributes) from an association manager (not shown). The request component 620 can parse the contents of the information associated with the association request to determine what action(s) are to be taken. The association processor 640 facilitates action(s) *via* the service 650. Action(s) of can be dependent upon, for example, the connection type sought to be established. Once the action(s) have been completed, the association processor 640 can provide information regarding the association to the response component 630. The response component 630 can then generate information associated with an association response (*e.g*., an association response and/or list of attributes) which can be provided to the association manager.

In one example, a plurality of handlers 610 implement the following COM interface:

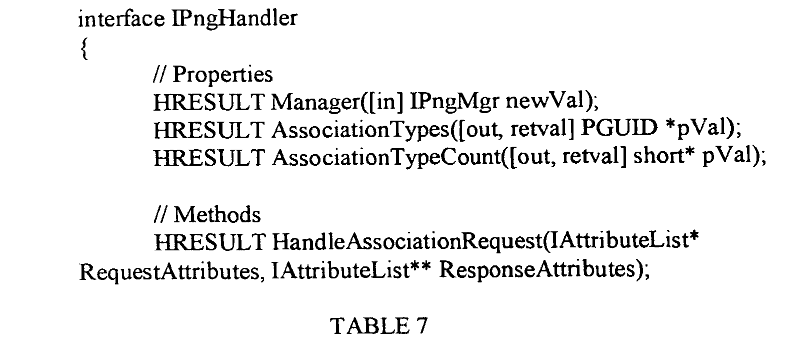

In this example, "manager" is an interface pointer to the association manager. Further, "AssociationTypes" returns an array of AssociationType GUIDs that the PONG Handler can handle. Similarly, "AssociationTypeCount" is the number of AssociationTypes that the PONG Handler can handle. "HandleAssociationRequest()" is called by the association manager when it receives an association request that the handler 610 reported it supported. "RequestAttributes" is a list of attribute structures. The handler 610 is expected to allocate the memory necessary to return the ResponseAttributes which is a list of attribute structures which are the attributes that will be returned to the device (not shown).

In another example, the handler 610 stores information about the device, for example, in a database for future installation once the device is discovered on the target medium. For example, a particular handler 610 can be related to a Wi-Fi target medium. In this example, device(s) desiring to employ the Wi-Fi target medium send association request(s) and receive association response(s) in the form of attribute lists. The attribute lists can be provided by the handler 610 to an association manager which can then form an association response.

With respect to Tables 9, 10 and 11 below, "attribute" refers to a friendly name associated with an attribute element. "Attribute ID" is an identifier (*e.g*., number) used to identify the attribute element in the attribute list. "Length" refers to the length of the data in an attribute element. Attribute lengths can be varied and/or fixed and, in this example, are expressed in bytes. A length value can also specify a maximum length. In the association response, in one example, fixed lengths can be used so that the offset to the value is deterministic; aiding the ability of a device to parse the response. The actual value of the attribute may not use up the entire length allocated for the data. In these cases, an additional field can specify the actual length of the attributes data. "Allowed Values" refers to the allowed values field describes the values to be supported by the device. If an allowed value is required, it means the device must support that value if it contained in the attribute list. Unless otherwise stated in Tables 9, 10 and/or 11, values should be assumed to be required. If an allowed value is optional, the device need not support the value, but should be prepared for it to be contained in the attribute list. Optional values may become required in future versions of this specification.

### Wireless protocols

The IEEE 802.11 set of standards defines two network types: encrypted networks (*e.g*., WEP networks) and unencrypted networks. Owing to the well-known weaknesses of the WEP protocol, the wireless industry implemented support for the IEEE 802.1 x standard as a mechanism for addressing the key deficiencies in the WEP protocol, those being user authentication, encryption key management and encryption key distribution. For WEP-encrypted networks, the user needs to provide an encryption key and for 802.1x enabled networks the key is provided automatically if the user has a valid credential (*e.g*., such as a digital certificate or username and password). For 802.11 networks which are encrypted, this presents a usability problem as it is currently not possible to determine *a priori* whether the user needs to enter the WEP key or whether the network supports 802. 1 x, in which case they do not have to enter it.

To address the underlying weaknesses of the WEP algorithm, which has been shown to be cryptographically weak, a security enhancement to the 802.11 set of standards was introduced, called Wi-Fi Protected Access (WPA). WPA also addresses some of the usability issues of the original 802.11 standard by specifying an information element which WPA-capable access points include in their beacon frame. This information element describes *inter alia* whether the network requires the user to enter the encryption key called WPA pre-shared key mode (WPA-PSK) or whether the key is provided automatically by virtue of the user's credential, referred to as "WPA mode".

### Wired Equivalent Privacy

WEP is defined by the IEEE 802.11 standard and is intended to provide a level of data confidentiality that is equivalent to a wired network. Due to the nature of wireless LAN networks, implementing a security infrastructure that monitors physical access to the network can be difficult. Unlike a wired network where a physical connection is required, anyone within range of a wireless access point (AP) can conceivably send and receive frames as well as listen for other frames being sent. This makes eavesdropping and remote sniffing of wireless LAN frames very easy.

WEP provides data confidentiality services by encrypting the data sent between wireless nodes. WEP encryption for an 802.11 frame is indicated by setting a WEP flag in the MAC header of the 802.11 frame. WEP provides data integrity for random errors by including an integrity check value (ICV) in the encrypted portion of the wireless frame.

The following tables illustrates the two shared keys that WEP defines:

**TABLE 8**

| Key type | Description |
|---|---|
| Multicast/global key | Encryption key that helps to protect multicast and broadcast traffic from a wireless AP to all of its connected wireless clients. |
| Unicast session key | Encryption key that helps to protect unicast traffic between a wireless client and a wireless AP and multicast and broadcast traffic sent by a wireless client to the wireless AP. |

WEP encryption employs the RC4 symmetric stream cipher with 40-bit and 104-bit encryption keys.

### Wi-Fi Protected Access

WPA is a Wi-Fi standard designed to improved upon the security features of WEP. Unlike WEP, 802.1x authentication is required in WPA. With WPA, rekeying of both unicast and global encryption keys is required. For the unicast encryption key, the Temporal Key Integrity Protocol (TKIP) changes the key for every frame, and the change is synchronized between the wireless client and the wireless access point (AP). For the global encryption key, WPA includes a facility for the wireless AP to advertise the changed key to the connected wireless clients.

TKIP replaces WEP with an encryption algorithm that is stronger than the WEP algorithm. TKIP also provides for verification of the security configuration after the encryption keys are determined; synchronized changing of the unicast encryption key for each frame; and, determination of a unique starting unicast encryption key for each pre-shared key authentication.

WPA further employs a method know as "Michael" that specifies an algorithm that calculates an 8-byte message integrity code (MIC). The MIC is placed between the data portion of the IEEE 802.11 frame and the 4-byte integrity check value (ICV). The MIC field is encrypted together with the frame data and the ICV.

WPA is an interim standard that will be replaced with the IEEE's 802.11i standard upon its completion.

### Wi-Fi Handler

The association type is an attribute contained in the header section of the association request and association response, and is separate from data attributes. This attribute is used by the association manager to forward the association request(s) to the correct handler. In this example, a Wi-Fi handler 410 has the following required association type:

**TABLE 9**

| Attribute: | Attrib ID | Length | R/O | Allowed Values |
|---|---|---|---|---|
| Association type | 0x0000 | 16B | R | FSSBDC92-7827-4C91-B784-0EC8A152FADA |

The data section of the association request includes attributes that are specific to the attribute type. The following table identifies exemplary attributes that an association manager can forward to a Wi-Fi handler 610:

**TABLE 10**

| Attribute: | Attrib ID | Length | R/O | Allowed Values |
|---|---|---|---|---|
| MAC Address | 0x100 1 | 6B | O | A 48 bit value corresponding to the 802.11 interface on the device |
| Network Authentication Type Flags | 0x100 2 | 2B | R | These flags allow a device to communicate which types of Network Auth types are supported. (1 = supported, 0 = not supported): |
| | | | | The value of this field is a bitwise OR of one or more of the following values: |
| | | | | 0x0001 = Open |
| | | | | 0x0002 = WPAPSK |
| | | | | 0x0004 = Shared |
| | | | | 0x0008 = WPA |
| | | | | 0x0010 = WPA-NONE |
| | | | | 0x0020 = WPA2 |
| | | | | All other values are reserved and |
| | | | | shall be set to 0. |
| Data Encryption Type Flags | 0x100 3 | 2B | R | These flags allow a device to communicate which types of "Data Encryption type" are supported. (1 = supported, 0 = not supported): |
| | | | | The value of this field is a bitwise OR of one or more of the following values: |
| | | | | Ox0001 = WEP |
| | | | | 0x0002 = TKIP |
| | | | | 0x0004 = AES |
| | | | | All other values are reserved and shall be set to 0 |
| Connection Type Flags | 0x100 4 | 1B | R | These flags allow a device to communicate which types of "Connection type" are supported. (1 = supported, 0 = not supported): |
| | | | | The value of this field is a bitwise OR of one or more of the following values: |
| | | | | 0x01 = ESS |
| | | | | 0x02 = IBSS |
| | | | | All other values are reserved and shall be set to 0 |

### MAC Address

The MAC Address is 6 byte value that contains the 48 bit value of the MAC Address. For example: 0x00 0x07 0xE9 0x4C 0xA8 0x1 C.\

### Network Authentication Type Flags

This set of flags allows a device to signal which "Network Authentication type" types are supported. This information can be used for diagnostic purposes. If a device fails to support the required attributes, then the user can be notified of this and given actionable instructs to correct the problem. In this example, the value of this field is a bitwise OR of one or more of the following values:
0x0001 = Open
0x0002 = WPAPSK
0x0004 = Shared
0x0008 = WPA
0x0010 = WPA-NONE
0x0020 = WPA2
In this example, other values are reserved and set to 0.

### Data Encryption Type Flags

This set of flags allows a device to signal which "Data Encryption type" types are supported. This information can be used for diagnostic purposes. If a device fails to support the required attributes, then the user can be notified of this and given actionable instructs to correct the problem. In this example, the value of this field is a bitwise OR of one or more of the following values:
0x0001 = WEP
0x0002 = TKIP
0x0004 = AES
Again, in this example, other values are reserved and set to 0.

### Connection Type Flags

This set of flags allows a device to signal which "Connection type" types are supported. This information is used for diagnostic purposes. If a device fails to support the required attributes, then the user can be notified of this and given actionable instructs to correct the problem. The value of this field is a bitwise OR of one or more of the following values:
0x01 = ESS (Extended Service Set)
0x02 = IBSS (Independent Basic Service Set)
In this example, other values are reserved and are set to 0.

Based, at least in part, upon the handler 610's interaction with the service 650, the response component 630 generates information associated with an association response. Continuing with the Wi-Fi handler example, Table 11 identifies exemplary association response attributes. The lengths of the attributes in the attribute list in this example are fixed. Thus, device manufactures can easily jump to the appropriate offset to read the value of any given attribute in the response. Offsets refer to the start of the attribute.

**TABLE 11**

| Attribute: | Attrib ID | Length | R/O | Allowed Values |
|---|---|---|---|---|
| SSID (offset=x0013) | 0x2001 | 32B | R | A string between 0 and 32 characters in length, consisting of printable 8-bit ASCII characters |
| SSID Length (offset=x0034) | 0x2002 | 1B | R | An integer value between 0-32 representing the length of SSID attribute in bytes. |
| Network Key (offset=x0036) | 0x2003 | 64B | R | A string of 5 to 64 8-bit ASCII chars in length. More details are contained in the Network Key attribute description in section 5.6.2 |
| Network Key Length (offset=x0077) | 0x2004 | 1B | R | An integer value between 5-64 representing the length of Network Key attribute in bytes |
| Key Provided Automatically (802 1 x) (offset=x0079) | 0x2005 | 1B | R | 0 for no, 1 for yes, must correspond with authentication type, see description for details |
| Network Authentication Type: (offset=x007B) | 0x2006 | 2B | R | These flags proscribe the Network Auth types. Only one flag will be set at a time. |
| | | | | The response will be one of the following values: |
| | | | | 0x0001 = Open |
| | | | | 0x0002 = WPAPSK |
| | | | | 0x0004 = Shared |
| | | | | 0x0008 = WPA |
| | | | | 0x0010=WPA-NONE |
| | | | | 0x0020 = WPA2 |
| | | | | All other values are reserved and shall be set to 0. |
| Data Encryption Type (offset=x007E) | 0x2007 | 2B | R | These flags proscribe the "Data Encryption type." Only one flag will be set at a time. |
| | | | | The response will be one of the following values: |
| | | | | 0x0001 = WEP |
| | | | | 0x0002 = TKIP |
| | | | | 0x0004 = AES |
| | | | | All other values are reserved and shall be set to 0 |
| Connection Type (offset=x0081) | 0x2008 | 1B | R | These flags proscribe the "Connection type." Only one flag will be set at a time |
| | | | | The response will be one of the following values: |
| | | | | 0x01 = ESS |
| | | | | 0x02 = IBSS |
| | | | | All other values are reserved and shall be set to 0 |

### SSID

The SSID is a string used in broadcasting wireless networks, as discussed previously.

### Network Key

The network key is a string used to secure the network. In this example, the following attributes are placed as constraints on the allowed values of the Network key. The Device will have to be prepared to accept or reject the following configurations:

**TABLE 12**

| Network Auth Type | Data Auth Type | Valid Network Key values |
|---|---|---|
| WPA | TKIP | 0 - 63 ASCII characters, |
| | | 64 HEX characters |
| WPA | AES | 0 - 63 ASCII characters, |
| | | 64 HEX characters |
| Open | WEP | 5 or 13 ASCII characters, |
| | | 10 or 26 HEX characters |

### WEP key

When the data auth type is WEP, the Network key is either an ASCII or HEX representation of a 40-bit or 104-bit WEP key. The type can be determined by the length of the string.

### WPAPSK pass phrase

If the network key attribute is a 0-63 char ASCII string and the "network authentication type" attribute is WPA, the network key attribute is used as a pass phrase to derive the WPA binary key.

### Key Provided Automatically (802.1 x)

The "Key Provided Automatically (802.1 x)" attribute dictates whether or not the Network Key is provided via 801.x This is typically set to 0 in cases where WPA-PSK, or WEP are used to secure the wireless network.

### Network Authentication Type

The network authentication type indicates what type of security mechanism is required to join a particular network. The flag set specifies which of the following mechanisms is used:
0x0001 = Open
0x0002 = WPAPSK
0x0004 = Shared
0x0008 = WPA
0x0010=WPA-NONE
0x0020 = WPA2
In this example, other values are reserved and are set to 0. Significantly, unlike the association request, these flags are mutually exclusive - only one flag can be set at a given time.

### Data Encryption Type

This value specifies the encryption mechanism deployed by the wireless network. The flag set specifies which of the following mechanisms is used:
0x0001 = WEP
0x0002 = TKIP
0x0004 = AES

All other values are reserved and are set to 0. Significantly, unlike the association request, these flags are mutually exclusive - only one flag can be set at a given time.

### Connection Type

Connection type defines the type of wireless network. The flag set specifies which of the following mechanisms is used:
0x01 = ESS
0x02 = IBSS
All other values are reserved and are set to 0. These flags are mutually exclusive.

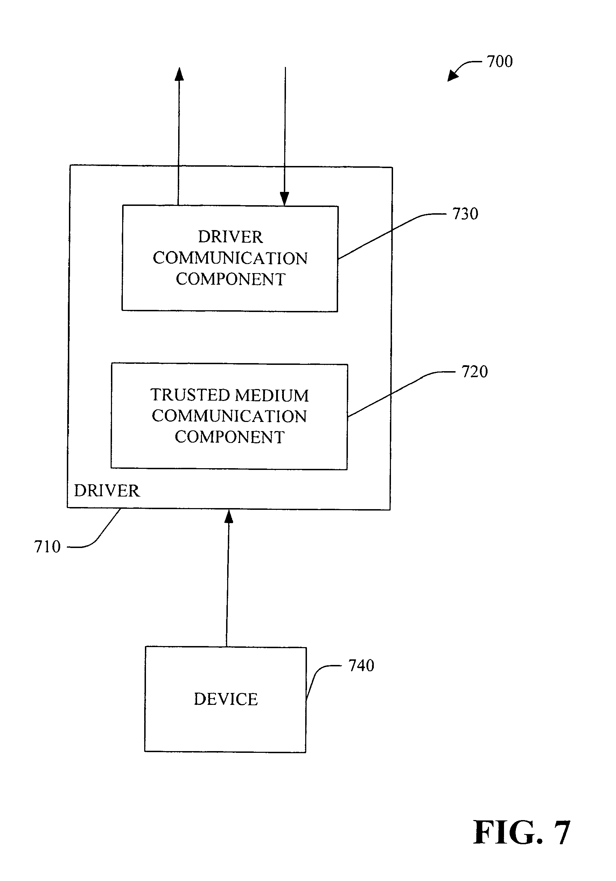

Turning next to Fig. 7, an association driver system 700 in accordance with an aspect of the subject invention is illustrated. The system 700 includes a driver 710 comprising a trusted media communication component 720 and a driver communication component 730.

The trusted medium communication component 720 interfaces with a device 740 *via* a trusted medium (e.g., USB connection). In one example, the trusted medium communication component 720 receives an association request from the device 740 (e.g., association request initiated time independent of device enumeration). In another example, the trusted medium communication component 720 receives notification of a request to issue an association request. Thereafter, the driver 710 generates an association request which is sent to an association manager (not shown) *via* the driver communication component 730.

In one example, driver(s) 710 implement the following interface:

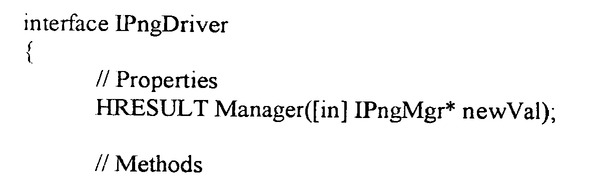

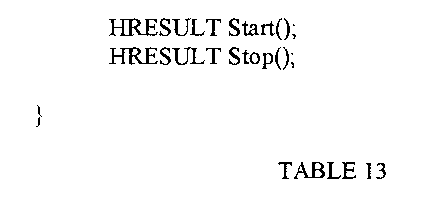

"Manager" is an interface pointer to the association manager so that the driver can call SendAssociationRequest. Start() is called by the association manager when it wishes for the driver to begin detecting and issuing new association requests. Stop() is called by the association manager when it whishes for the driver to stop issuing new association requests (*e.g*., when a user desires to disable association over a particular trusted medium).

In one example, a particular driver 710 can be related to a USB trusted medium. In this example, device(s) desiring to employ an untrusted medium send association request(s) and receive association response(s) securely through the driver 710.

For device(s) that implement dynamic association functionality, where association requests can be generated independent of device enumeration, in one example, there is an optional Interrupt IN endpoint. This endpoint facilitates notifications of new association requests. The standard endpoint descriptor for this optional endpoint can be found in Table 14:

**TABLE 14**

| Offset | Field | Size | Value | Description |
|---|---|---|---|---|
| 0 | bLength | 1 | 07h | Size of this descriptor in bytes |
| 1 | bDescriptorType | 1 | 05h | ENDPOINT descriptor type |
| 2 | bEndpointAddress | 1 | 81 - 8Fh | The address of this endpoint on the USB device. This address is an endpoint number between 1 and 15. |
| | | | | Bit 0..3 Endpoint number |
| | | | | Bit 4..6 Reserved, must be 0 |
| | | | | Bit 7 1 = In |
| 3 | bmAttributes | 1 | 03h | This is an Interrupt endpoint |
| 4 | wMaxPacketSize | 2 | 00??h | Maximum data transfer size |
| 6 | bInterval | 2 | ??h | Interval for polling endpoint for data transfers. Expressed in milliseconds. Must be in the range from 1 to 255. The recommended value is 255. |

If a device's interface does not contain the optional endpoint, then association will only occur at enumeration time. If such a device wishes to initiate the association process, it will have to do a device initiated USB reset. This will cause the device to be re-enumerated by the host, at which point the host will retrieve the association request(s) from the device. In another example, a device can also implement HUB functionality to cause the association function to come and go as the device wishes.

Since the control endpoint is the only mandatory endpoint for a device that supports an association interface, the necessary data transfers happen over that endpoint. In this example, these transfers are in the form of association class requests.

Table 15 depicts a list of association class requests that must be supported by a device in one example.

**TABLE 15**

| Request | Value | Section |
|---|---|---|
| GET_ASSOCIATION_INFORMATION | 0x01 | 0 |
| GET_ASSOCIATION_REQUEST | 0x02 | 0 |
| SET_ASSOCIATION_RESPONSE | 0x03 | 0 |

### GET ASSOCIATION INFORMATION

This request retrieves an association information structure from the device. The association information includes a list of REQUEST_INFO blocks. Each REQUEST_INFO block pertains to a single association request that the device wishes to issue:

| | |
|---|---|
| bmRequestType | 10100001B |
| bRequest | GET_ASSOCIATION_INFORMATION |
| wValue | 0x0000 |
| wIndex | Interface |
| wLength | Length of requested Data |
| Data | ASSOCIATION_INFORMATION |

### TABLE 16

Table 17 illustrates an exemplary ASSOCIATION_INFORMATION structure:

**TABLE 17**

| Offset | Field | Size | Value | Description |
|---|---|---|---|---|
| 0 | PendingRequestCount | 1 | 0x00 - 0xff | Number of pending requests that are listed at the end of this structure |
| 1 | Flags | 2 | See table 18 for information | See table 18 for information |
| 3 | RequestInfoArray | Sizeof(REQUEST_INFO) *PendingRequestCount | 0x000000 - 0xffffffff | Array of REQUEST_ INFO structures. (See table 19) |

Table 18 provides exemplary Association Information Flag information:

**TABLE 18**

| Flag Name | Flag Value | Description |
|---|---|---|
| AdditionalRequests | 0x0001 | If this flag is set, it indicates that the device may have additional association requests pending after the current set. This being set results in the host sending another |
| | | GET_ASSOCIATION_INFORMATION after the current set of association requests have been handled. They may be useful for devices that have explicit ordering concerns, or who may issue a request as a result of a specific response. |
| | | If this is not set, it indicates to the host that it does not need to issue another GET_ASSOCIATION_INFORMATION request. |

Table 19 illustrates an exemplary REQUEST_INFO structure:

**TABLE 19**

| Offset | Field | Size | Value | Description |
|---|---|---|---|---|
| 0 | RequestID | 1 | 0x00 - 0xff | This field identifies a specific association request. |
| | | | | This value will be used to retrieve the request and send the response. |
| 1 | RequestSize | 4 | 0x00000000 - 0xffffffff | This is the size in bytes of the particular association request. |

### GET_ASSOCIATION_REQUEST

This request retrieves a particular association request from the device. The request is identified by the RequestID value in the wValue field:

**TABLE 20**

| | |
|---|---|
| bmRequestType | 10100001B |
| bRequest | GET_ASSOCIATION_REQUEST |
| wValue | RequestID BlockNumber |
| wIndex | Interface |
| wLength | Length of requested Data |
| Data | Association Request |

In this example, a request block is a 4KB block of data. The maximum transfer size of a control transfer is 64KB, so 16 request blocks can be theoretically transferred in each GET_ASSOCIATION_REQUEST. The actual amount of data to be transferred is specified by the wLength field. The BlockNumber specified in the wValue field identifies the starting block number for this control transfer. So, in this example, the device 540 should return association request data for the request specified by RequestID starting at offset BlockNumber * 4KB, and transferring wLength bytes.

### SET ASSOCIATION RESPONSE

This request sends a response to a specific association request identified by the RequestID value in the wValue field:

**TABLE 21**

| | |
|---|---|
| bmRequestType | 00100001B |
| bRequest | SET_ASSOCIATION_RESPONSE |
| wValue | RequestID TransferFlags |
| wIndex | Interface |
| wLength | Length of response Data |
| Data | Association Response |

In this example, the TrasferFlags value is the bitwise OR of zero or more of the values found in Table 22:

**TABLE 22**

| Flag Name | Flag Value | Description |
|---|---|---|
| LastBlock | 0x01 | If this flag is set, it indicates that this is the last control transfer that contains data for this specific Association Response. This facilitates chaining of control transfers for large responses. |

### Association interrupt-in message(s)

### NewAssociationRequest

This interrupt IN message indicates to the host that the device has new or modified association request(s) that need to be processed. Upon receiving this message, the host can issue a GET_ASSOCIATION_INFORMATION request, and process the requests accordingly.

**TABLE 23**

| Offset | Field | Size | Value | Description |
|---|---|---|---|---|
| 0 | bMessage Type | 1 | 50h | New association request event |
| 1 | bRequestCount | 1 | 0x00- 0xff | Number of pending requests that may be returned in a subsequent |
| | | | | GET_ASSOCIATION_INFORMATION. |
| | | | | This field is really a hint to the host to determine how large of a buffer it needs to allocate in order to receive the association information. |

It is to be appreciated that the system 100, device 110, association manager 120, handler 130, driver 140, handler registry 150, driver registry 160, system 400, association manager 410, manager communication component 420, handler identification component 430, association manager 510, initialization component 520, system 600, handler 610, request component 620, response component 630, association processor 640, service 650, system 700, driver 710, trusted medium communication component 720, driver communication component 730 and/or the device 740 can be computer components as that term is defined herein.

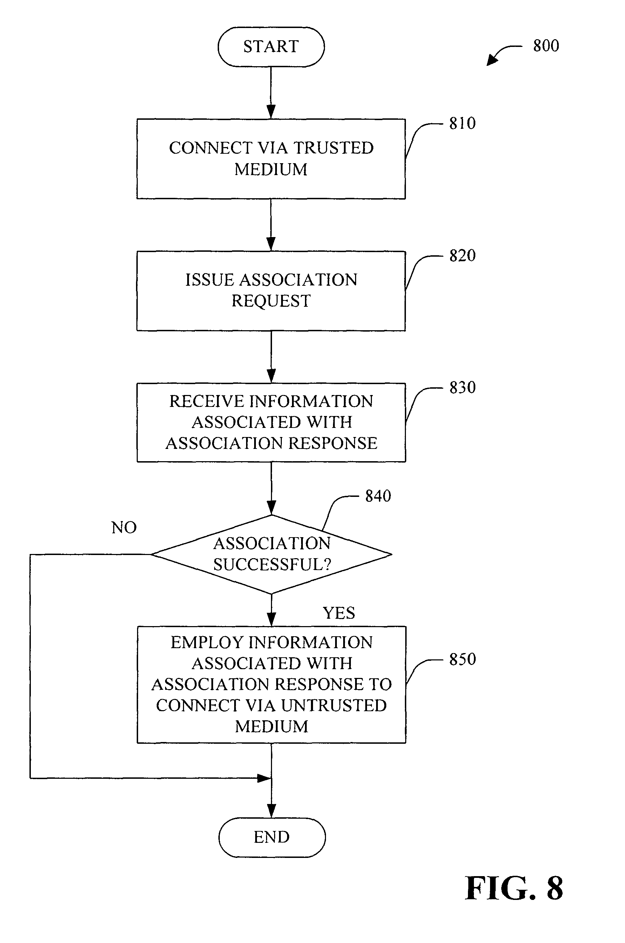

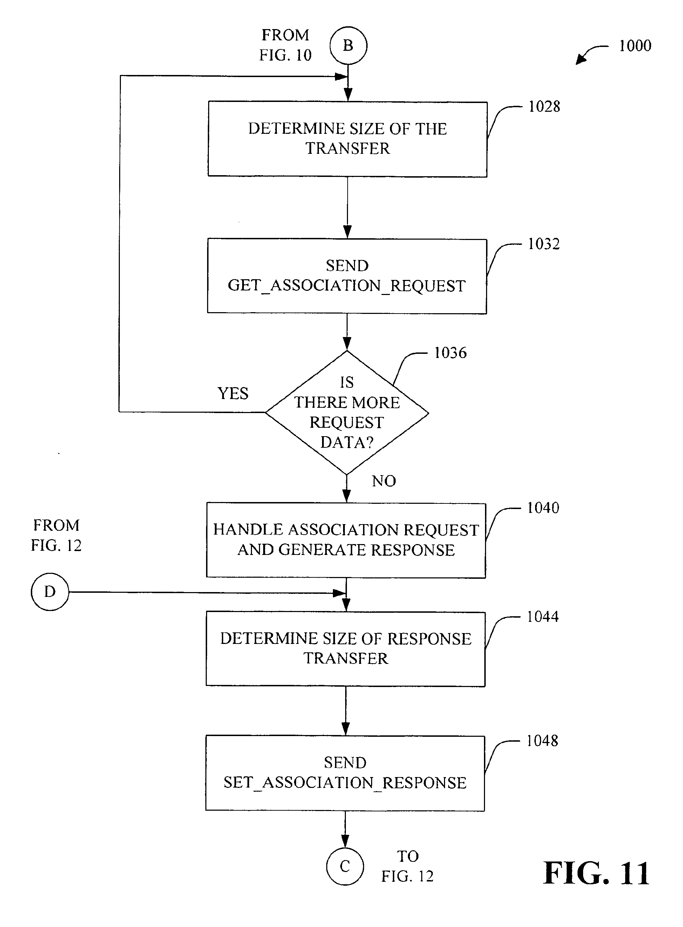

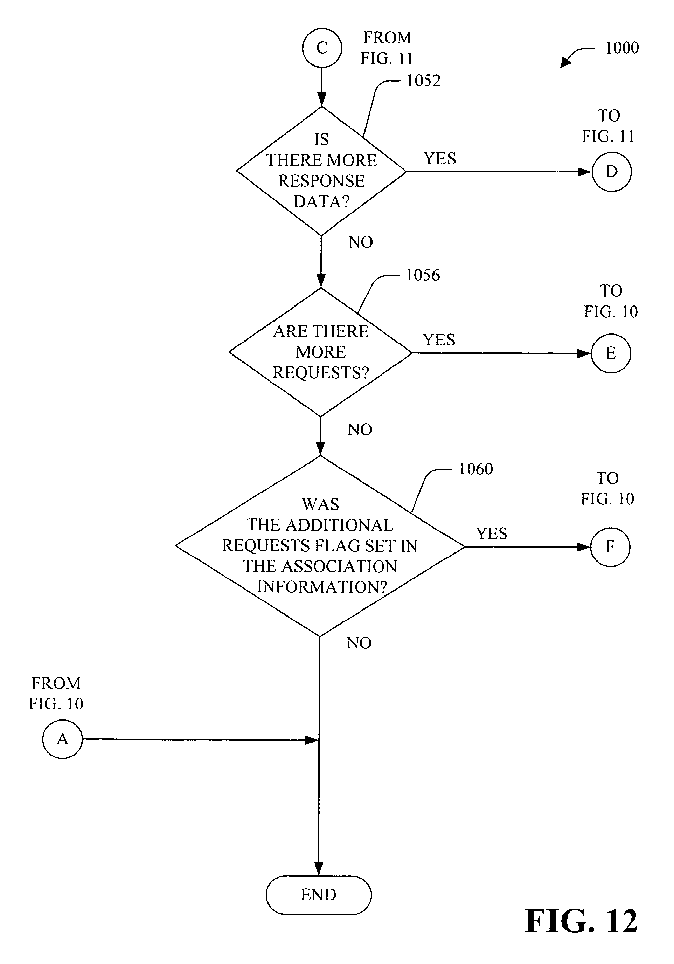

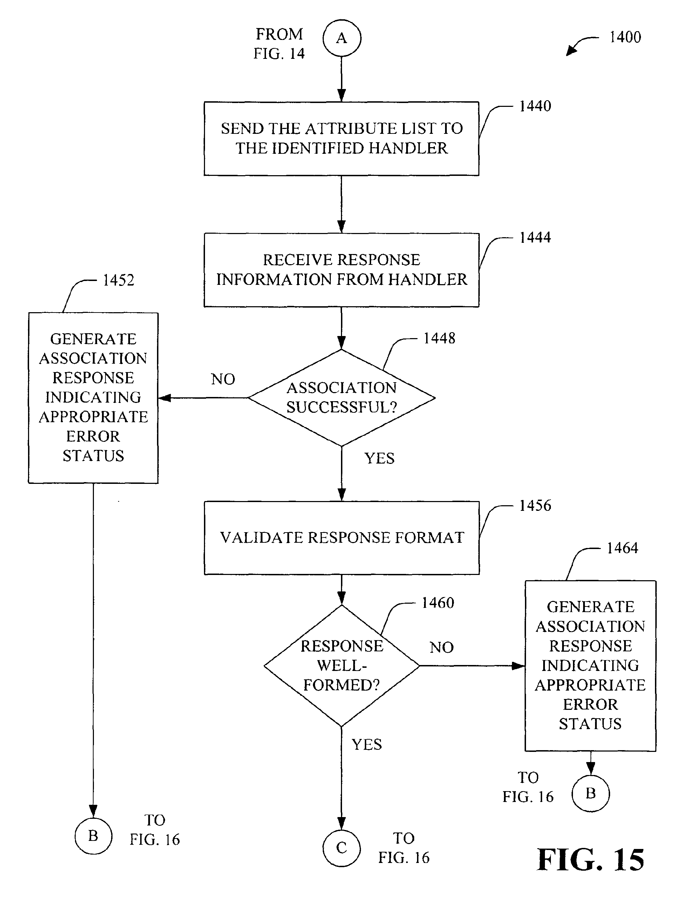

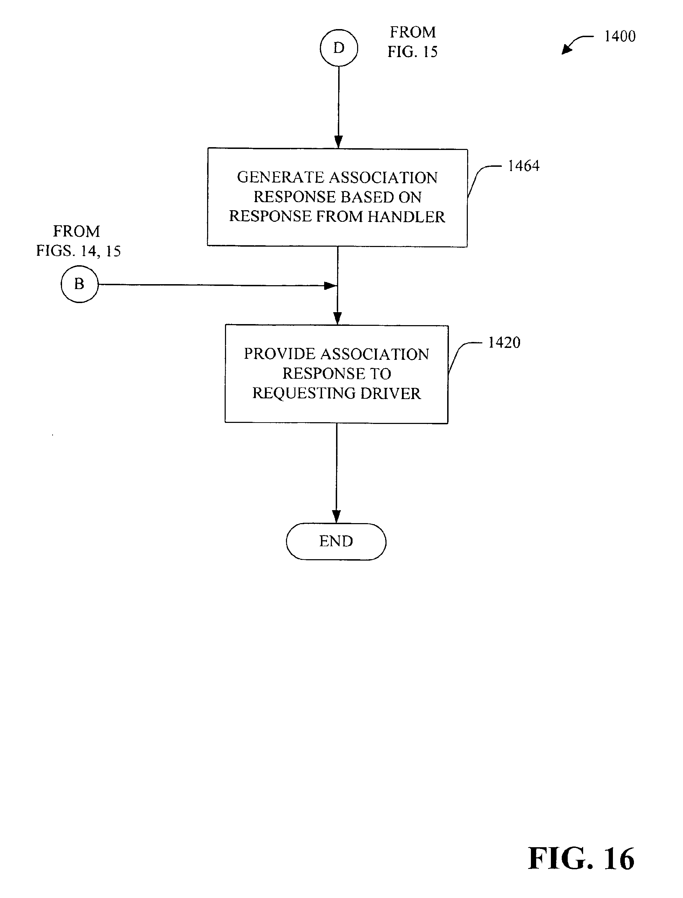

Turning briefly to Figs. 8-18, methodologies that may be implemented in accordance with the subject invention are illustrated. While, for purposes of simplicity of explanation, the methodologies are shown and described as a series of blocks, it is to be understood and appreciated that the subject invention is not limited by the order of the blocks, as some blocks may, in accordance with the subject invention, occur in different orders and/or concurrently with other blocks from that shown and described herein. Moreover, not all illustrated blocks may be required to implement the methodologies in accordance with the subject invention.

The subject invention may be described in the general context of computer-executable instructions, such as program modules, executed by one or more components. Generally, program modules include routines, programs, objects, data structures, *etc.* that perform particular tasks or implement particular abstract data types. Typically the functionality of the program modules may be combined or distributed as desired in various embodiments.

Referring to Fig. 8, a method of associating a device 800 in accordance with an aspect of the subject invention is illustrated. At 810, a connection (*e.g*., of a device) is established *via* a trusted medium (*e.g*., USB). At 820, an association request is issued, for example, by the device and/or an associated driver. At 830, information associated with an association response is received (*e.g*., from a driver). The information can include, for example, the association response received from an association manager. Alternatively, the information can include a portion of the association response received from the association manager.

At 840, a determination is made as to whether the association was successful. If the determination at 840 is NO, no further processing occurs. If the determination at 840 is YES, at 850, information associated with the association response is employed to connect *(e.g.,* the device) *via* an untrusted medium (*e.g*., wireless connection).

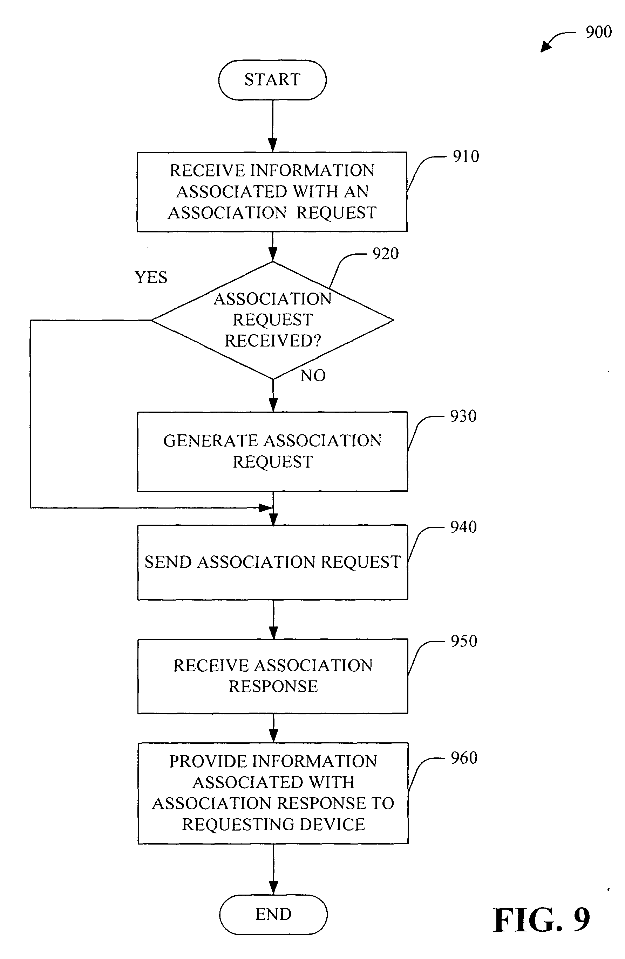

Turning next to Fig. 9, a method facilitating association of a device 900 in accordance with an aspect of the subject invention is illustrated. At 910, information associated with an association request is received. At 920, a determination is made as to whether an association request was received. If the determination at 920 is NO, at 930, the association request is generated, and, processing continues at 940. If the determination at 920 is YES, at 940, the received association request is sent, for example, to an association manager.

At 950, an association response is received, for example, from the association manager. At 960, information associated with the association response is provided to the requesting device. For example, the information can include the entire association response and/or a portion of the association response. Thereafter, no further processing occurs.

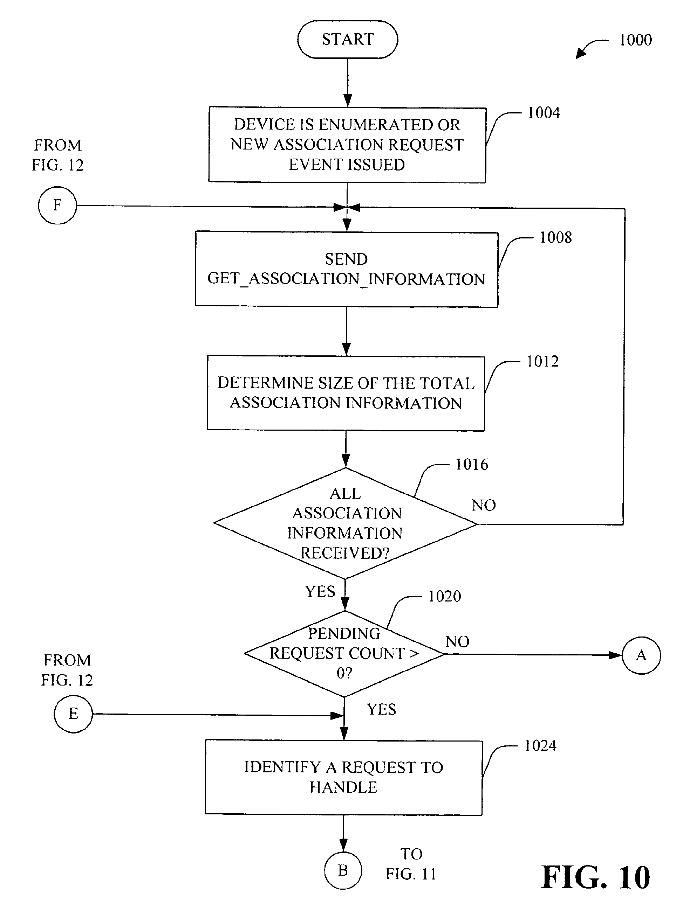

Next, referring to Figs. 10 - 12, a method of associating a device *via* a USB connection 1000 in accordance with an aspect of the subject invention is illustrated. At 1004, a device is enumerated and/or a new association request event is issued. At 1008, a GET_ASSOCIATION_INFORMATION request is sent to the device, for example, by a driver. At 1012, a size of the total association information is determined, for example, by the driver (*e.g*., size = 3 + sizeof (REQUEST INFO) * PendingRequestCount).

At 1016, a determination is made as to whether substantially all of the association information has been received, for example, by the driver. If the determination at 1016 is NO, processing continues at 1008. If the determination at 1016 is YES, at 1020, a determination is made as to whether PendingRequestCount is greater than zero. If the determination at 1020 is NO, no further processing occurs.

If the determination at 1020 is YES, at 1024, a request is identified to handle (*e.g*., by the driver). At 1028, the size of the transfer (*e.g*., association request) is determined. At 1032, a GET_ASSOCIATION_REQUEST is sent. At 1036, a determination is made as to whether there is more request data. If the determination at 1036 is YES, process continues at 1028. If the determination at 1036 is NO, at 1040, the association requested is handled and an association response is generated (e.g., by an association manager and/or handler).

At 1040, the size of the association response transfer is determined. At 1048, a SET_ASSOCIATION_RESPONSE is sent. At 1052, a determination is made as to whether there is more response data. If the determination at 1052 is YES, processing continues at 1044. If the determination at 1052 is NO, at 1056, a determination is made as to whether there are more requests.

If the determination at 1056 is YES, processing continues at 1024. If the determination at 1056 is NO, at 1060 a determination is made as to whether an additional requests flag has been sent in the association information. If the determination at 1060 is YES, processing continues at 1008. If the determination at 1060 is NO, no further processing occurs.

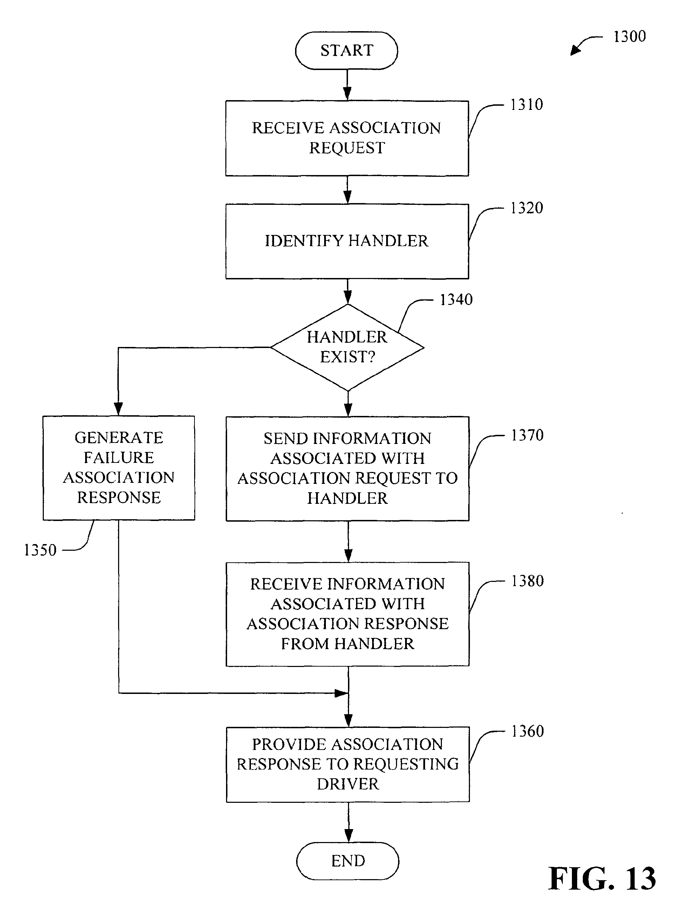

Referring next to Fig. 13, an association management method 1300 in accordance with an aspect of the subject invention is illustrated. At 1310, an association request is received, for example, from a driver. At 1320, a handler for the association request is identified. At 1340, a determination is made as to whether a handler exists for the association request. If the determination at 1340 is NO, at 1350, a failure of association response is generated, and, processing continues at 1360.

If the determination at 1340 is YES, at 1370, information associated with the association request is sent to the handler. For example, the information can comprise the association request and/or a portion of the association request (*e.g*., attribute list(s)).

At 1380, information associated with an association response is received from the handler. At 1360, an association response is provided to the requesting driver.

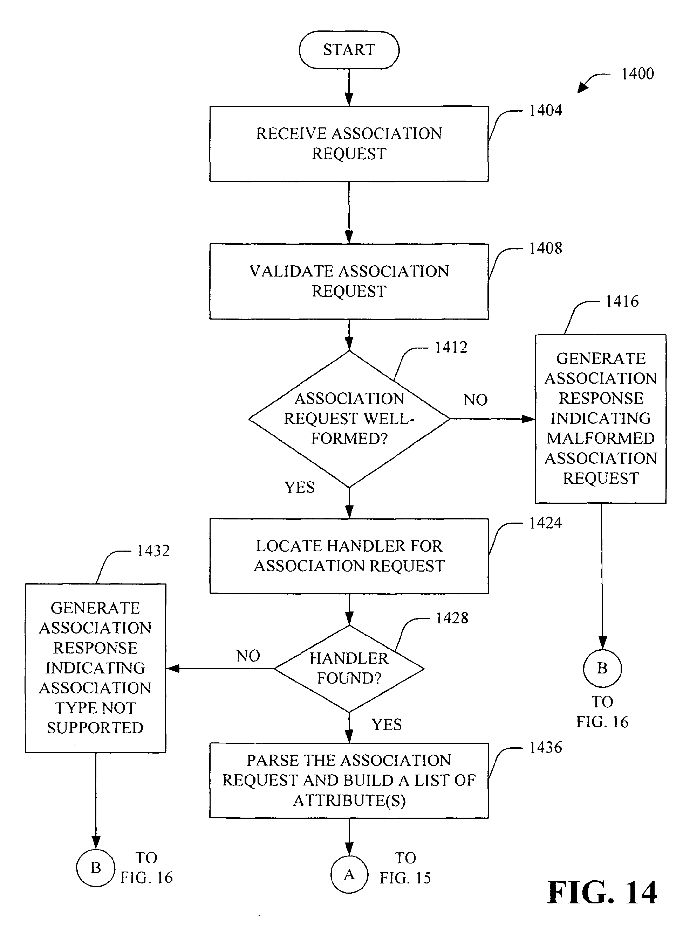

Turning to Figs. 14 - 16, an association management method 1400 in accordance with an aspect of the subject invention is illustrated. At 1404, an association request is received, for example, from a driver. At 1408, the association request is validated. At 1412, a determination is made as to whether the association request is well-formed. If the determination at 1412 is NO, at 1416, an association response indicating malformed association request is generated, and, processing continues at 1420.

If the determination at 1412 is YES, at 1424, a handler for the association request is located. At 1428, a determination is made as to whether a handler has been found. If the determination at 1428 is NO, at 1432, an association response indicating association type not supported is generated, and, processing continues at 1420.

If the determination at 1428 is YES, at 1436, the association request is parsed and a list of attribute(s) is built. At 1440, the attribute list is sent to the identified handler. At 1444, response information is received from the handler. At 1448, a determination is made as to whether the association was successful. If the determination at 1448 is NO, at 1452, an association response is generated indicating an appropriate error status, and, processing continues at 1420.

If the determination at 1448 is YES, at 1456, the response format is validated. At 1460, a determination is made as to whether the response is well-formed. If the determination at 1460 is NO, at 1464, an association response indicating an appropriate error status is generated, and, processing continues at 1420.

If the determination at 1460 is YES, at 1468, an association response is generated based on the response from the handler. At 1420, the association response is provided to the requesting driver, and, no further processing occurs.

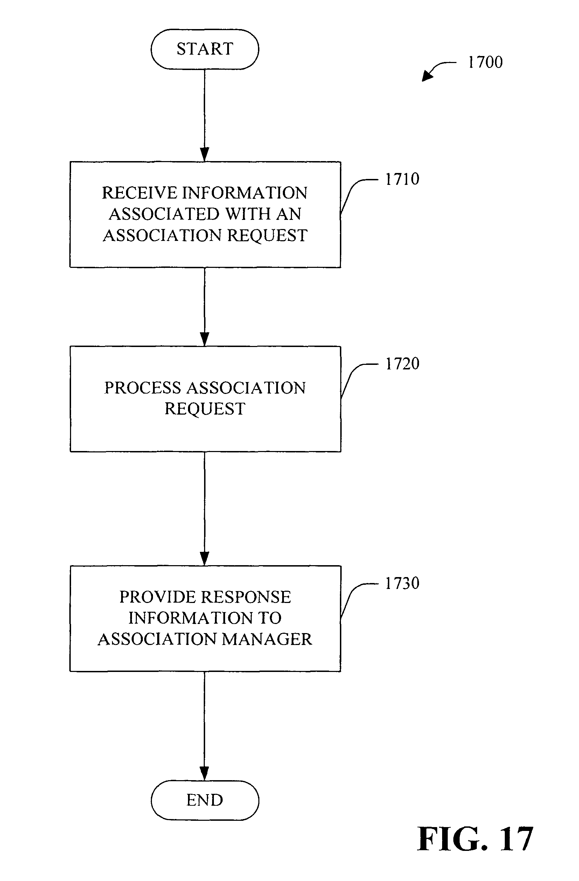

Referring to Fig. 17, an association handler method 1700 in accordance with an aspect of the subject invention is illustrated. At 1710, information associated with an association request (*e.g*., attribute list) is received, for example, an association manager. At 1720, the association request is processed. At 1730, response information is provided to the association manager.

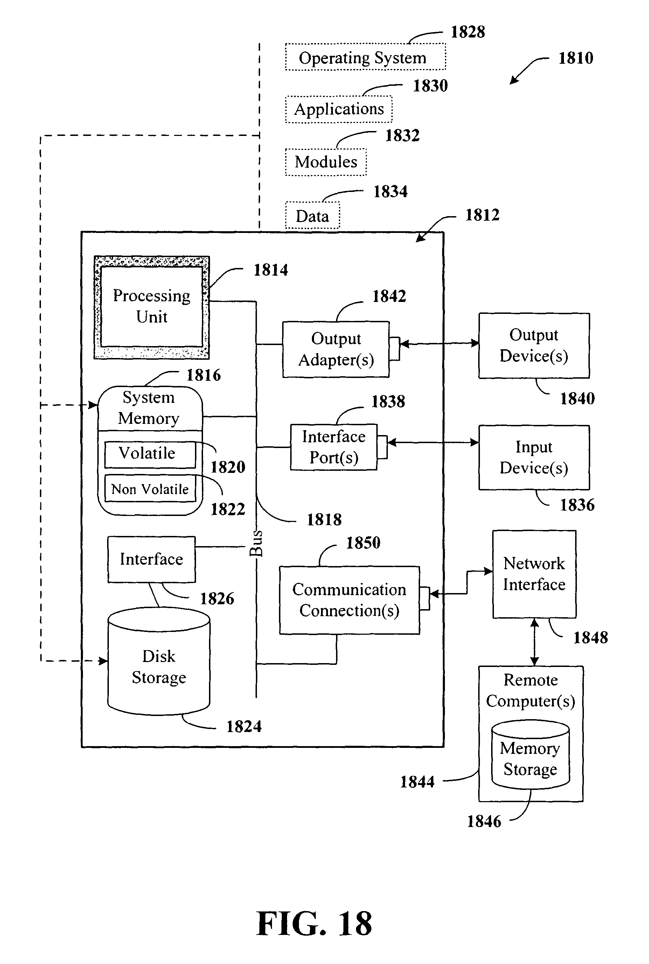

In order to provide additional context for various aspects of the subject invention, Fig. 18 and the following discussion are intended to provide a brief, general description of a suitable operating environment 1810 in which various aspects of the subject invention may be implemented. While the subject invention is described in the general context of computer-executable instructions, such as program modules, executed by one or more computers or other devices, those skilled in the art will recognize that the subject invention can also be implemented in combination with other program modules and/or as a combination of hardware and software. Generally, however, program modules include routines, programs, objects, components, data structures, *etc.* that perform particular tasks or implement particular data types. The operating environment 1810 is only one example of a suitable operating environment and is not intended to suggest any limitation as to the scope of use or functionality of the subject invention. Other well known computer systems, environments, and/or configurations that may be suitable for use with the subject invention include but are not limited to, personal computers, hand-held or laptop devices, multiprocessor systems, microprocessor-based systems, programmable consumer electronics, network PCs, minicomputers, mainframe computers, distributed computing environments that include the above systems or devices, and the like.

With reference to Fig. 18, an exemplary environment 1810 for implementing various aspects of the subject invention includes a computer 1812. The computer 1812 includes a processing unit 1814, a system memory 1816, and a system bus 1818. The system bus 1818 couples system components including, but not limited to, the system memory 1816 to the processing unit 1814. The processing unit 1814 can be any of various available processors. Dual microprocessors and other multiprocessor architectures also can be employed as the processing unit 1814.

The system bus 1818 can be any of several types of bus structure(s) including the memory bus or memory controller, a peripheral bus or external bus, and/or a local bus using any variety of available bus architectures including, but not limited to, an 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1816 includes volatile memory 1820 and nonvolatile memory 1822. The basic input/output system (BIOS), containing the basic routines to transfer information between elements within the computer 1812, such as during start-up, is stored in nonvolatile memory 1822. By way of illustration, and not limitation, nonvolatile memory 1822 can include read only memory (ROM), programmable ROM (PROM), electrically programmable ROM (EPROM), electrically erasable ROM (EEPROM), or flash memory. Volatile memory 1820 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM)

Computer 1812 also includes removable/nonremovable, volatile/nonvolatile computer storage media. Fig. 18 illustrates, for example a disk storage 1824. Disk storage 1824 includes, but is not limited to, devices like a magnetic disk drive, floppy disk drive, tape drive, Jaz drive, Zip drive, LS-100 drive, flash memory card, or memory stick. In addition, disk storage 1824 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1824 to the system bus 1818, a removable or non-removable interface is typically used such as interface 1826.

It is to be appreciated that Fig 18 describes software that acts as an intermediary between users and the basic computer resources described in suitable operating environment 1810. Such software includes an operating system 1828. Operating system 1828, which can be stored on disk storage 1824, acts to control and allocate resources of the computer system 1812. System applications 1830 take advantage of the management of resources by operating system 1828 through program modules 1832 and program data 1834 stored either in system memory 1816 or on disk storage 1824. It is to be appreciated that the subject invention can be implemented with various operating systems or combinations of operating systems.

A user enters commands or information into the computer 1812 through input device(s) 1836. Input devices 1836 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1814 through the system bus 1818 *via* interface port(s) 1838. Interface port(s) 1838 include, for example, a serial port, a parallel port, a game port, and a universal serial bus (USB). Output device(s) 1840 use some of the same type of ports as input device(s) 1836. Thus, for example, a USB port may be used to provide input to computer 1812, and to output information from computer 1812 to an output device 1840. Output adapter 1842 is provided to illustrate that there are some output devices 1840 like monitors, speakers, and printers among other output devices 1840 that require special adapters. The output adapters 1842 include, by way of illustration and not limitation, video and sound cards that provide a means of connection between the output device 1840 and the system bus 1818. It should be noted that other devices and/or systems of devices provide both input and output capabilities such as remote computer(s) 1844.

Computer 1812 can operate in a networked environment using logical connections to one or more remote computers, such as remote computer(s) 1844. The remote computer(s) 1844 can be a personal computer, a server, a router, a network PC, a workstation, a microprocessor based appliance, a peer device or other common network node and the like, and typically includes many or all of the elements described relative to computer 1812. For purposes of brevity, only a memory storage device 1846 is illustrated with remote computer(s) 1844. Remote computer(s) 1844 is logically connected to computer 1812 through a network interface 1848 and then physically connected *via* communication connection 1850. Network interface 1848 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1850 refers to the hardware/software employed to connect the network interface 1848 to the bus 1818. While communication connection 1850 is shown for illustrative clarity inside computer 1812, it can also be external to computer 1812. The hardware/software necessary for connection to the network interface 1848 includes, for exemplary purposes only, internal and external technologies such as, modems including regular telephone grade modems, cable modems and DSL modems, ISDN adapters, and Ethernet cards.

What has been described above includes examples of the subject invention. It is, of course, not possible to describe every conceivable combination of components or methodologies for purposes of describing the subject invention, but one of ordinary skill in the art may recognize that many further combinations and permutations of the subject invention are possible. Accordingly, the subject invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. An association management system (400, 500) for associating a device to a computer system via a wireless communication connection, the association management system comprising:
a handler registry (150) that stores identification information associated with one or more handlers; and
an association manager (130, 410, 510) that provides an association request (200) received from the device via a wired communication connection to a particular handler(140) based, at least in part, upon routing information in the association request and the identification information stored in the handler registry, the association manager generates an association response comprising information obtained from the handler registry for the device to communicate securely with the computer system via the wireless communication connection.

2. The system of claim 1, the identification information associated with a handler comprising a globally unique identifier.

3. The system of claim 1, further comprising an initialization component (520) that identifies at least one driver and at least one handler to be instantiated during system initialization, the initialization component further initiating instantiation of the at least one driver and at least one handler.

4. The system of claim 3, further comprising a driver registry (160) that stores information associated with the at least one driver to be instantiated.

5. The system of claim 1, the association request comprising at least one association request attribute (220).

6. The system of claim 5, the association request attribute comprising an attribute type, an attribute data length and data.

7. The system of claim 1, the association manager generates an association response (300) based, at least in part, upon information provided by the handler.

8. The system of claim 7, the association response comprising an association response attribute (320).

9. The system of claim 8, the association response attribute comprising an attribute type, an attribute length, and data.

10. The system of claim 7, the association request generated by a driver, the driver further receives the association response.

11. An association management method for associating a device to a computer system via a wireless communication connection, the method comprising:
identifying (1320) a handler based, at least in part, upon an association request received from the device via a wired communication connection
sending (1370) information associated with the association request to the identified handler;
receiving (1380) a response from the handler;
generating an association response based, at least in part, upon the response, and comprising information for the device to communicate securely with the computer system via the wireless communication connection; and
providing (1360) the association response to a requesting driver.

12. The method of claim 11, further comprising at least one of:
validating (1408) the association request;
determining (1412) whether the association request is well-formed; and
generating (1416) an association response indicating a malformed association request, if the association request is not well-formed.

13. The method of claim 11, further comprising at least one of:
determining (1428) whether a handler was located;
generating (1432) an association response indicating an association type not supported, if the handler was not located; and
parsing (1436) the association request to build a list of attributes.

14. The method of claim 11, further comprising at least one of:
validating (1456) the response format;
determining (1448) whether an association was successful;
generating (1452) an association response indicating an error status, if the association was not successful;
determining (1460) whether the response is well-formed; and
generating (1464) an association response indicating an error status, if the response is not well-formed.

15. A computer readable medium having stored thereon computer executable instructions for carrying out the method of one of claims 11 to 14.

## Patentansprüche

1. Verbindungs-Verwaltungssystem (400, 500) zum Verbinden einer Vorrichtung mit einem Computersystem über eine Drahtlos-Kommunikationsverbindung, wobei das Verbindungs-Verwaltungssystem umfasst:
eine Handler-Registry (150), die Identifizierungsinformationen speichert, die mit einem oder mehreren Handlern verbunden sind; und
einen Verbindungs-Manager (130, 410, 510), der einem bestimmten Handler (140) eine von der Vorrichtung über eine verdrahtete Kommunikationsverbindung empfangene Verbindungsanforderung (200) bereitstellt, die wenigstens teilweise auf Routing-Informationen in der Verbindungsanforderung und den in der Handler-Registry erhaltene Identifizierungsinformationen basiert, wobei der Verbindungs-Manager eine Verbindungsantwort erzeugt, die von der Handler-Registry gewonnene Informationen zum sicheren Kommunizieren zwischen der Vorrichtung und dem Computersystem über die Drahtlos-Kommunikationsverbindung umfasst.

2. System nach Anspruch 1, wobei die mit einem Handler verbundenen Identifizierungsinformationen einen global einheitlichen Identifikator (globally unique identifier) umfassen.

3. System nach Anspruch 1, das des Weiteren eine Initialisierungs-Komponente (520) umfasst, die wenigstens einen Treiber und wenigstens einen Handler identifiziert, die bei Systeminitialisierung zu instanziieren sind, wobei die Initialisierungs-Komponente des Weiteren Instanziierung des wenigstens einen Treibers und wenigstens einen Handlers einleitet.

4. System nach Anspruch 3, das des Weiteren eine Treiber-Registry (160) umfasst, die Informationen speichert, die mit dem wenigstens einen zu instanziierenden Treiber verbunden sind.

5. System nach Anspruch 1, wobei die Verbindungsanforderung wenigstens ein Verbindungsanforderungs-Attribut (220) umfasst.

6. System nach Anspruch 5, wobei das Verbindungsanforderungs-Attribut einen Attribut-Typ, eine Attribut-Datenlänge und Daten umfasst.

7. System nach Anspruch 1, wobei der Verbindungs-Manager eine Verbindungsantwort (300) erzeugt, die wenigstens teilweise auf durch den Handler bereitgestellten Informationen basiert.

8. System nach Anspruch 7, wobei die Verbindungsantwort ein Verbindungsantwort-Attribut (320) umfasst.

9. System nach Anspruch 8, wobei das Verbindungsantwort-Attribut einen Attribut-Typ, eine Attribut-Länge und Daten umfasst.

10. System nach Anspruch 7, wobei die Verbindungsanforderung durch einen Treiber erzeugt wird und der Treiber des Weiteren die Verbindungsantwort empfängt.

11. Verbindungs-Verwaltungsverfahren zum Verbinden einer Vorrichtung mit einem Computersystem über eine Drahtlos-Kommunikationsverbindung, wobei das Verfahren umfasst:
Identifizieren (1320) eines Handlers wenigstens teilweise auf einer von der Vorrichtung über eine verdrahtete Kommunikationsverbindung empfangenen Verbindungsanforderung basierend,
Senden (1370) von Informationen, die mit der Verbindungsanforderung verbunden sind, zu dem identifizierten Handler;
Empfangen (1380) einer Antwort von dem Handler;
Erzeugen einer Verbindungsantwort, die wenigstens teilweise auf der Antwort basiert und Informationen für die Vorrichtung zum sicheren Kommunizieren mit dem Computersystem über die Drahtlos-Kommunikationsverbindung umfasst; und
Bereitstellen (1360) der Verbindungsantwort für einen anfordernden Treiber.

12. Verfahren nach Anspruch 11, das des Weiteren wenigstens umfasst:
Validieren (1408) der Verbindungsanforderung;
Feststellen (1412), ob die Verbindungsanforderung regelkonform (well-formed) ist; und
Erzeugen (1416) einer Verbindungsantwort, die eine nicht regelkonforme (malformed) Verbindungsanforderung anzeigt, wenn die Verbindungsanforderung nicht regelkonform ist.

13. Verfahren nach Anspruch 11, das des Weiteren wenigstens umfasst:
Feststellen (1428), ob ein Handler lokalisiert wurde;
Erzeugen (1432) einer Verbindungsantwort, die einen Verbindungstyp anzeigt, der nicht unterstützt wird, wenn der Handler nicht lokalisiert wurde; und
Parsen (1436) der Verbindungsanforderung, um eine Liste von Attributen aufzubauen.

14. Verfahren nach Anspruch 11, das des Weiteren wenigstens umfasst:
Validieren (1456) des Antwortformats;
Feststellen (1448), ob eine Verbindung erfolgreich war;
Erzeugen (1452) einer Verbindungsantwort, die einen Fehlerstatus anzeigt, wenn die Verbindung nicht erfolgreich war;
Feststellen (1460), ob die Antwort regelkonform ist; und
Erzeugen (1464) einer Verbindungsantwort, die einen Fehlerstatus anzeigt, wenn die Antwort nicht regelkonform ist.

15. Computerlesbares Medium, auf dem durch Computer ausführbare Befehle zum Ausführen des Verfahrens nach einem der Ansprüche 11 bis 14 gespeichert sind.

## Revendications

1. Système de gestion d'association (400, 500) pour associer un dispositif à un système informatique par l'intermédiaire d'une connexion de communication sans fil, le système de gestion d'association comprenant :
un registre de support (150) qui stocke des informations d'identification associées à un ou plusieurs supports ; et
un gestionnaire d'association (130, 410, 510) qui fournit une requête d'association (200) reçue du dispositif, par l'intermédiaire d'une connexion de communication cablée, à un support particulier (140) sur la base, au moins en partie, d'informations d'acheminement de la requête d'association et des informations d'identification stockées dans le registre de support, le gestionnaire d'association générant une réponse d'association comprenant des informations obtenues du registre de support pour que le dispositif communique de manière sécurisée avec le système informatique par l'intermédiaire de la connexion de communication sans fil.

2. Système selon la revendication 1, les informations d'identification associées à un support comprenant un identificateur globalement unique.

3. Système selon la revendication 1, comprenant en outre un composant d'initialisation (520) qui identifie au moins un pilote et au moins un support à instancier pendant l'initialisation de système, le composant d'initialisation initiant en outre l'instanciation du pilote et du support.

4. Système selon la revendication 3, comprenant en outre un registre de pilote (160) qui stocke des informations associées au pilote à instancier.

5. Système selon la revendication 1, la requête d'association comprenant au moins un attribut de requête d'association (220).

6. Système selon la revendication 5, l'attribut de requête d'association comprenant un type d'attribut, une longueur de données d'attribut et des données.

7. Système selon la revendication 1, le gestionnaire d'association générant une réponse d'association (300) sur la base, au moins en partie, d'informations fournies par le support.

8. Système selon la revendication 7, la réponse d'association comprenant un attribut de réponse d'association (320).

9. Système selon la revendication 8, l'attribut de réponse d'association comprenant un type d'attribut, une longueur d'attribut, et des données.

10. Système selon la revendication 7 dans lequel la requête d'association est générée par un pilote, le pilote recevant en outre une réponse d'association.

11. Procédé de gestion d'association pour associer un dispositif à un système informatique par l'intermédiaire d'une connexion de communication sans fil, le procédé comprenant les étapes consistant à :
identifier (1320) un support sur la base, au moins en partie, d'une requête d'association reçue du dispositif par l'intermédiaire d'une connexion de communication cablée ;
envoyer (1370) au support identifié des informations associées à la requête d'association ;
recevoir (1380) une réponse en provenance du support ;
générer une réponse d'association basée, au moins en partie, sur la réponse, et comprenant des informations, pour que le dispositif communique de façon sécurisée avec le système informatique par l'intermédiaire de la connexion de communication sans fil ; et
fournir (1360) une réponse d'association à un pilote la demandant.

12. Procédé selon la revendication 11, comprenant en outre au moins l'une des étapes consistant à :
valider (1408) la requête d'association
déterminer (1412) si la requête d'association est ou non correctement formée ; et
générer (1416) une réponse d'association indiquant une requête d'association mal formée, si la requête d'association n'est pas formée correctement.

13. Procédé selon la revendication 11, comprenant en outre au moins l'une des étapes consistant à :
déterminer (1428) si un support a ou non été localisé ;
générer (1432) une réponse d'association indiquant un type d'association non pris en charge, si le support n'a pas été localisé ; et
analyser (1436) la requête d'association pour constituer une liste d'attributs.

14. Procédé selon la revendication 11 comprenant en outre au moins l'une des étapes consistant à :
valider (1456) le format de réponse ;
déterminer (1448) si une association a ou non réussi ;
générer (1452) une réponse d'association indiquant un état d'erreur, si l'association n'a pas réussi ;
déterminer (1460) si la réponse a ou non été formée correctement ; et
générer (1464) une réponse d'association indiquant un état d'erreur, si la réponse n'a pas été formée correctement.

15. Support lisible par ordinateur sur lequel sont stockées des instructions exécutables par ordinateur pour exécuter le procédé selon l'une des revendications 11 à 14.
